# EUROPEAN PATENT APPLICATION

(11) **EP 1 777 965 A1**
(43) Date of publication of application: **25.04.2007**
(21) Application number: 05768636.2
(22) Date of filing: 02.08.2005
(51) Int. Cl.: H04N 7/26

(54) **IMAGE DECODING DEVICE AND IMAGE ENCODING DEVICE**

(30) Priority: 05.08.2004 JP 2004229932
(71) Applicant: MATSUSHITA ELECTRIC INDUSTRIAL CO., LTD., Osaka 571-8501 (JP)
(72) Inventor: KUDO, Shintaro c/o Mat.Elec.Ind.Co.,Ltd., Osaka-shi, Osaka 540-6319 (JP); NISHI, Takahiro c/o Mat.Elec.Ind.Co., Ltd., Osaka-shi, Osaka 540-6319 (JP); IGUCHI, Masayasu c/o Mat.Elec.Ind.CO.,Ltd., Osaka-shi, Osaka 540-6319 (JP)
(74) Representative: Eisenführ, Speiser & Partner
(86) International application number: PCT/JP2005/014112
(87) International publication number: WO 2006/013854

(57) **Abstract**

Provided is an image decoding device which can eliminate block distortion and also can restrain decrease of a processing speed, even if an order of decoding blocks is changed.

Such an image decoding device (100) has: a variable length decoding unit (111) or the like which sequentially decodes the blocks; a frame memory (102); a de-blocking filtering unit (119) which applies filtering processing to each decoded block; switches (103 and 104) in the first executing status, which stores the block into the frame memory (102) every time the block is decoded, and applies the filtering processing to the stored blocks; switches (103 and 104) in the second executing status, which applies the filtering processing to the block to be applied with the filtering processing every time the block is decoded; and a control unit (101) which switches between the first executing status and the second executing status of the switches (103 and 104).

## Description

### Technical Field

The present invention relates to an image decoding device which decodes a coded picture on a block-by-block basis, and more particularly to an image decoding device which applies filtering processing to the decoded blocks.

### Background Art

In compression technologies for moving pictures, there are, as standards, H.261, H.263, and H.264 by International Telecommunication Union (ITU) Telecommunication Standardization Sector, Moving Picture Experts Group (MPEG)-1, MPEG-2, and MPEG-4 by International Organization for Standardization (ISO), and the like.

In these moving picture compression technologies, one picture is divided into blocks and coding is performed on a block-by-block basis. By coding on the block-by-block basis, compression efficiency is increased, but a decoded picture causes block distortion more easily. In the H.264, in order to eliminate noise related to blocks, de-blocking filtering for eliminating the noise on a block-by-block basis is applied to a reference picture which is used in decoding or inter-picture prediction.

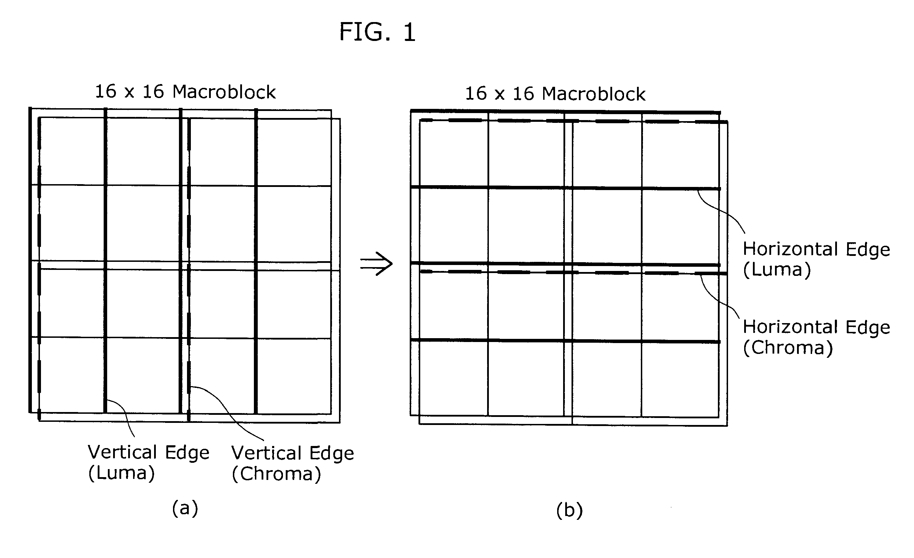

FIG. 1 is an explanatory diagram for explaining parts to which de-blocking filtering is applied.

De-blocking filtering in the H.264 is applied, as shown in FIG. 1, to edges of a block consisting of 4 x 4 pixels in a macroblock consisting of 16 x 16 pixels. As shown in thick solid lines in FIG. 1 (a), de-blocking filtering is applied to every edge (vertical edge) in a vertical direction for luma, and also as shown in thick dotted lines in FIG. 1 (a), de-blocking filtering is applied to some of the vertical edges for chroma. In addition, as shown in thick solid lines in FIG. 1 (b), de-blocking filtering is applied to every edge (horizontal edge) in a horizontal direction for luma, and also as shown in thick dotted lines in FIG. 1 (b), de-blocking filtering is applied to some of the horizontal edges for chroma.

Note that, in this de-blocking filtering, eight pixels sandwiching the edge are used. Note also that, a determination of whether or not the de-blocking filtering needs to be applied depends on a value of a filter code (disable_deblocking_filter_idc). When the filter code is 0, de-blocking filtering is applied to each of the above-described edges of the macroblock. On the other hand, when the filter code is 1, de-blocking filtering is not applied to any edge of the macroblock. Further, when the filter code is 2, de-blocking filtering is applied to each of the above-described edges of a macroblock which is not positioned at a slice boundary.

The de-blocking filtering can be divided into calculation of filter strength of each edge, calculation of threshold values α and β which are used for the determination of filtering processing necessity, and the filtering processing.

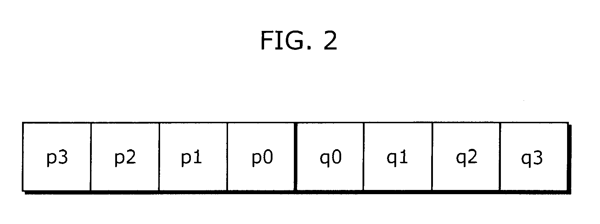

FIG. 2 is an explanatory diagram for explaining the calculation of the filter strength, the calculation of the threshold values, and the filtering processing.

The filter strength of each edge is, as shown in FIG. 2 for example, calculated using information of a block including a pixel p0 and information of a block including a pixel q0. In the meantime, the threshold values a and β which are used for the determination of filtering processing necessity are calculated using a quantization coefficient of the block including the pixel p0 and a quantization coefficient of the block including the pixel q0. The filtering processing is applied to an edge of a block consisting of 4 x 4 pixels using eight pixels sandwiching the edge. Such filtering processing is performed, as shown in FIG. 1, on a block-by-block basis in an order of the vertical edge and then the horizontal edge. At this point, in the filtering processing of the edge of the macroblock, pixels of macroblocks that are positioned on the immediately left of and immediately above a current macroblock and that have already been applied with de-blocking filtering, are used. Therefore, in the H.264, de-blocking filtering is applied to macroblocks sequentially from a macroblock whose address has a smaller value. Here, the address refers to a number which is allocated to each macroblock in a horizontal scanning order from a top-left corner in a picture.

In the meantime, in the above H.264, slice groups are defined, and such a slice group is structured by dividing a picture into some regions and slices are allocated to the regions. The slice refers to a group of one or more macroblocks in length that are allocated in the slice group sequentially from a macroblock whose address has a smaller value in order not to be overlapped with one another.

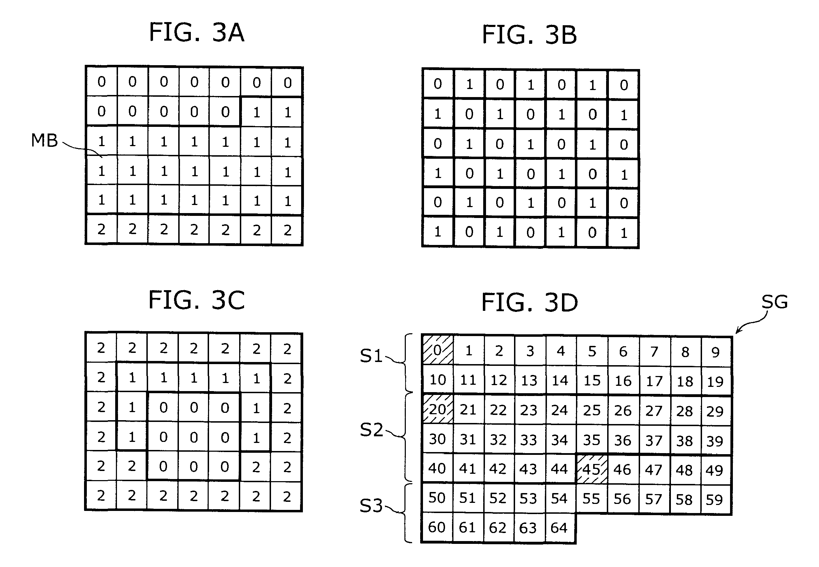

FIGS. 3A, 3B, and 3C are explanatory diagrams of the slice groups.

In the diagrams, blocks represent macroblocks, and numbers in the blocks are IDs of slice groups to which the respective macroblocks belong. For example, a number "1" indicated in a macroblock MB represents an ID of a slice group to which the macroblock MB belongs. Types of the slice groups are defined as seven types, each of which is represented by slice_group_map_type. FIGS. 3A, 3B, and 3C show three types among them.

FIG. 3A shows slice groups whose slice_group_map_type is 0, and macroblocks arranged continuously in a horizontal scanning order form a slice group. FIG. 3B shows slice groups whose slice_group_map_type is 1, and this slice group forms a structure in which macroblocks belonging to the same slice group are not positioned side by side. FIG. 3C shows slice groups whose slice_group_map_type is 2, and this slice group forms a structure in which, seemingly, the slice group is segmented into rectangular regions and such a slice group is overlapped on another slice group.

The type of the slice group defines how the slice group is segmented, and an encoder allocates slice groups to a macroblock, based on the definition. Moreover, the number of the slice groups is regulated for each profile, and for a base line profile the number is one to seven, for a main profile the number is one, and for an extended profile the number is one to seven (see non-patent document 1, for example).

The slice group as described above is divided into slices, each of which includes macroblocks.

FIG. 3D is a diagram showing slices included in a slice group.

For example, as shown in FIG. 3D, a slice group SG has a structure including a slice S1, a slice S2 and a slice S3. The slice S1 has a structure including macroblocks whose addresses range from 0 to 19, the slice S2 has a structure including macroblocks whose addresses range from 20 to 44, and the slice S3 has a structure including macroblocks whose addresses range from 45 to 64.

The conventional image decoding device decodes slices in a order sequentially from a slice whose starting macroblock has a smaller address compared to other slices. For example, the image decoding device decodes, as shown in FIG. 3D, firstly the slice S1 having a starting macroblock whose address is 0, next the slice S2 having a starting macroblock whose address is 20, and then the slice S3 having a starting macroblock whose address is 45. Moreover, when one slice is decoded, the image decoding device decodes macroblocks from a starting macroblock in the slice (shaded macroblock in FIG. 3D) and then sequentially from a macroblock whose address has a smaller value. Note that a decoding order of decoding slices sequentially from a slice whose starting macroblock has a smaller value compared to other slices, in other words, a decoding order in which, when a macroblock to be decoded is decoded, macroblocks positioned on the immediately left of and immediately above the macroblock to be decoded (the macroblocks having address smaller than an address of the macroblock to be decoded) have been already decoded, is hereinafter referred to as an address processing order.

Then, the image decoding device applies de-blocking filtering to the decoded macroblocks. Here, the order of decoding slices and macroblocks is the above-described address processing order, so that the image decoding device performs the decoding and the de-blocking filtering of the macroblocks by pipelining.

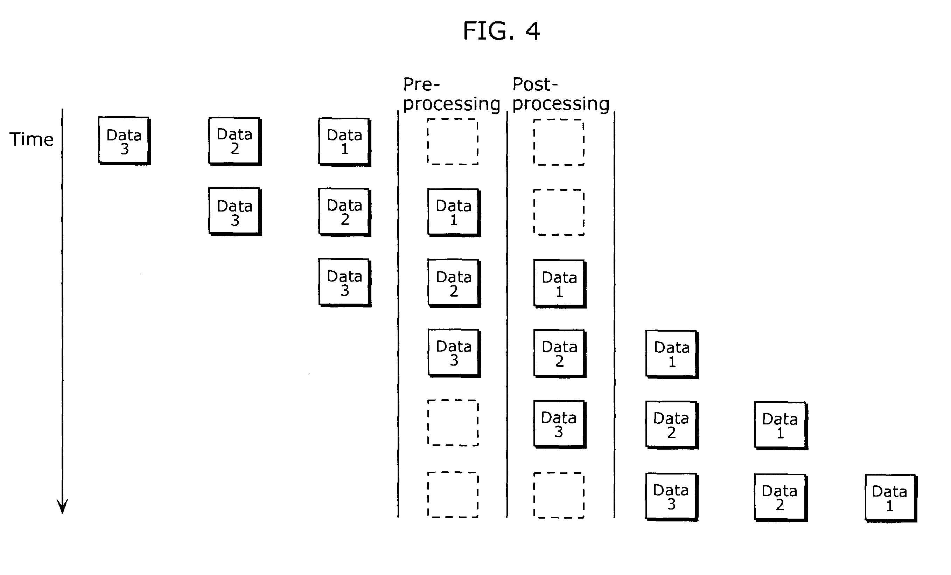

FIG. 4 is an explanatory diagram for explaining the pipelining.

In general, in an exclusive hardware specialized for particular processing, the processing is usually divided into detail operations to form pipelines in order to perform parallel processing. The pipelining is a technique by which speeding up of the processing is aimed by performing different operations at the same time sequentially and executing the operations continuously without causing a wasted wait time of units for performing the operations.

The pipelining includes, as shown in FIG. 4, pre-processing and post-processing. For example, each data is processed in an order of data 1, data 2, and then data 3. Firstly, pre-processing is applied to the data 1, and next post-processing of the data 1 and pre-processing of data 2 are performed at the same time. Next, post-processing of the data 2 and pre-processing of the data 3 are performed at the same time. With the above structure, it is possible to shorten a time of the processing and speed up the processing, as compared to a case where the respective pre-processing are performed for the data 1, the data 2, and the data, and after that the respective post-processing are performed for these data. Note that, in a case where the post-processing of the data 1 uses a result of the pre-processing of the data 2, the post-processing of the data 1 and the pre-processing of the data 2 cannot be performed in parallel, which obviously prevents the pipelining.

Here, the above conventional image decoding device performs the above-described pre-processing as decoding of macroblocks, and performs the above-described post-processing as de-blocking filtering of the macroblocks.

As described above, in the conventional image decoding device, the decoding order of slices and macroblocks is always the address processing order, so that the decoding and the de-blocking filtering of macroblocks are performed by the pipelining, in order to attempt to speed up a processing speed.
Non-patent document 1: H.264/MPEG-4AVC written standards

### Disclosure of Invention

However, there is a case where the order of decoding slices is not the address processing order.

In the above H.264, an arbitrary slice order, which indicates that an order of decoding slices is not always the address processing order, is defined. Use of this arbitrary slice order is prohibited in a main profile, but permitted in a base line profile and an extended profile. In a case where the arbitrary slice order is permitted, slices are not always decoded sequentially from a slice whose starting macroblock has a smaller address compared to other slices, but sometimes decoded from a slice whose starting macroblock has a larger address compared to other slices.

In such a case, when de-blocking filtering is to be applied to a macroblock at a slice boundary, macroblocks on the immediately left of and immediately above the macroblock to be processed have sometimes not yet been applied with decoding nor de-blocking filtering.

Therefore, assuming that the arbitrary slice order is permitted, the image decoding device needs to apply the de-blocking filtering to each macroblock, after all slices included in one picture are decoded per macroblock and thereby one decoded picture is constructed. This means that, in a case where the arbitrary slice order is permitted, the image decoding device cannot perform the decoding and the de-blocking filtering using the pipelining.

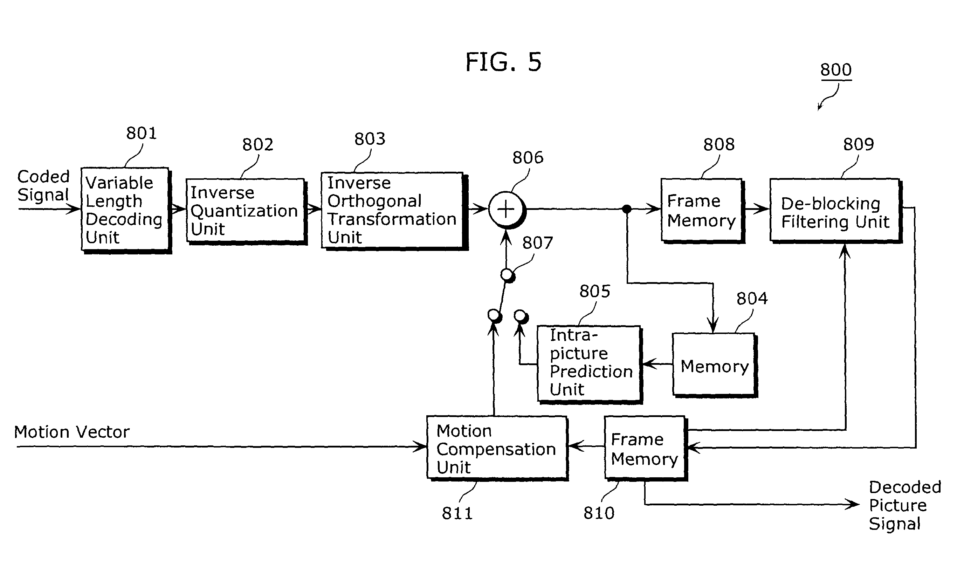

FIG. 5 is a block diagram showing a structure of the image decoding device conforming to the arbitrary slice order in the above H.264.

This image decoding device 800 decodes coded signal, and includes a variable length decoding unit 801, an inverse quantization unit 802, an inverse orthogonal transformation unit 803, a memory 804, an intra-picture prediction unit 805, an adder 806, a switch 807, a frame memory 808, a de-blocking filtering unit 809, a frame memory 810, and a motion compensation unit 811.

In the image decoding device 800 having the above structure, in an intra-mode for decoding coded signal of an I-picture, the coded signal is decoded into a quantized value by the variable length decoding unit 801, decoded into a frequency component by the inverse quantization unit 802, and decoded into a prediction error by the inverse orthogonal transformation unit 803. In addition, using pixels of: a macroblock on the immediately left of; a macroblock immediately above; a macroblock on the immediately upper left of; and a macroblock on the immediately upper right of, the macroblock to be processed which are stored in the memory 804, a predictive image is generated in the intra-picture prediction unit 805, and the prediction error is added to the predictive image by the adder 806. As a result, a re-constructed image, that is the decoded macroblock, is generated. Here, in the intra-mode, the switch 807 connects the intra-picture prediction unit 805 to the adder 806. The re-constructed image is stored into the memory 804 and also into the frame memory 808. Then, after the re-constructed images of all macroblocks included in one picture are stored into the frame memory 808, the de-blocking filtering unit 809 applies de-blocking filtering for eliminating block distortion to each re-constructed image in an address order sequentially from a re-constructed image of a macroblock positioned at a top-left corner in the picture, and stores the filtered re-constructed image into the frame memory 810. The picture which has been applied with the de-blocking filtering and stored into the frame memory 810 is outputted as a decoded picture signal onto a monitor or the like.

On the other hand, in an inter-mode for decoding coded signals of a P-picture and a B-picture, the coded signal is decoded into a quantized value by the variable length decoding unit 801, decoded into a frequency component by the inverse quantization unit 802, and decoded into a motion compensation error by the inverse orthogonal transformation unit 803. On the other hand, a motion compensation image is generated by the motion compensation unit 811, and the motion compensation error is added to the motion compensation image by the adder 806. As a result, a re-constructed image, that is the decoded macroblock, is generated. Here, in the inter-mode, the switch 807 connects the motion compensation unit 811 to the adder 806. The re-constructed image is stored into the memory 804 and also into the frame memory 808. Then, after re-constructed images of all macroblocks included in one picture are stored into the frame memory 808, the de-blocking filtering unit 809 applies de-blocking filtering for eliminating block distortion to each re-constructed image in an address order sequentially from a re-constructed image of a macroblock positioned at a top-left corner in the picture, and stores the filtered re-constructed image into the frame memory 810. The picture which has been applied with the de-blocking filtering and stored into the frame memory 810 is outputted as a decoded picture signal onto a monitor or the like.

Here, in a case where the filter code is 1, the de-blocking filtering unit 809 does not apply any processing to the re-constructed images and stores the re-constructed images into the frame memory 810.

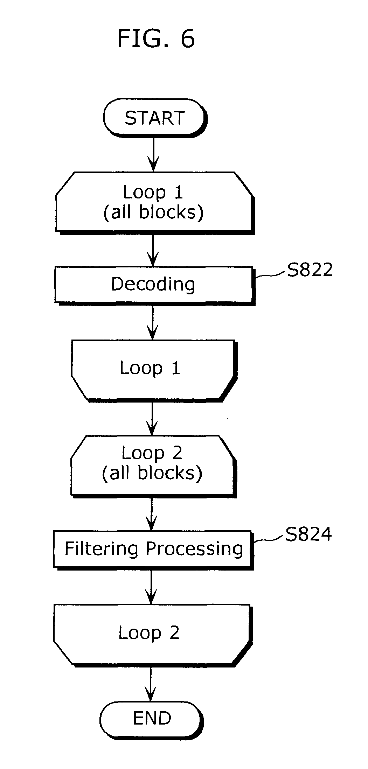

FIG. 6 is a flowchart showing a flow of processing performed by the image decoding device 800.

Firstly, the image decoding device 800 decodes all coded macroblocks of one picture indicated by coded signal, thereby decoding the all coded macroblocks into respective re-constructed images (Step S822 in Loop 1). Then, after all macroblocks are decoded into the re-constructed images, the image decoding device 800 applies de-blocking filtering to all re-constructed images which have been decoded at the Loop 1 (Step S824 in Loop 2). In other words, the image decoding device 800 applies de-blocking filtering to the picture on a macroblock-by-macroblock basis.

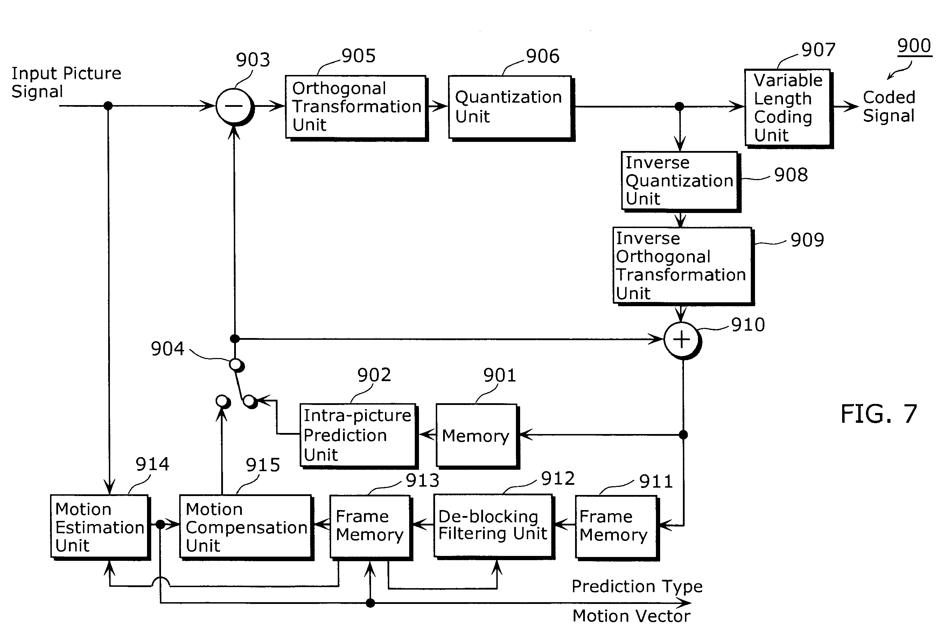

FIG. 7 is a block diagram showing a structure of an image encoding device conforming to the arbitrary slice order of the H.264.

This image encoding device 900 codes input picture signal, and includes a memory 901, an intra-picture prediction unit 902, a subtractor 903, a switch 904, an orthogonal transformation unit 905, a quantization unit 906, a variable length coding unit 907, an inverse quantization unit 908, an inverse orthogonal transformation unit 909, an adder 910, a frame memory 911, a de-blocking filtering unit 912, a frame memory 913, a motion estimation unit 914, and a motion compensation unit 915.

The image encoding device 900 having the above structure processes a picture indicated by the input picture signal on a macroblock-by-macroblock basis. In an intra-mode (intra-picture coding) for coding a picture indicated by the input picture signal as an I-picture, using re-constructed images of: a macroblock on the immediately left of; a macroblock immediately above; a macroblock on the immediately upper left of; a macroblock on the immediately upper right of, the macroblock to be processed which are stored in the memory 901, a predictive image is generated in the intra-picture prediction unit 902, and a prediction error, which is a difference between an image of the macroblock of the input picture signal and the predictive image, is outputted by the subtractor 903. Here, in the intra-mode, the switch 904 connects the intra-picture prediction unit 902 to the adder 903. The prediction error is transformed into a frequency component by the orthogonal transformation unit 905, and then compressed and coded into a quantized value in quantization performed by the quantization unit 906. Coding is applied to the quantized value by the variable length coding unit 907, and the coded result becomes an output. Further, the quantized value obtained by the quantization unit 906 is decoded into a frequency component in the inverse quantization unit 908, and decoded into a prediction error by the inverse orthogonal transformation unit 909. The prediction error is added to the predictive image by the adder 910. As a result, a re-constructed image, that is the decoded macroblock, is generated and stored into the memory 901. In addition, the re-constructed image is also stored into the frame memory 911. Then, after re-constructed images of all macroblocks included in one picture are stored into the frame memory 911, the de-blocking filtering unit 912 applies de-blocking filtering for eliminating block distortion to each re-constructed image in an address order sequentially from a re-constructed image of a macroblock positioned at a top-left corner in the picture, and stores the processed re-constructed images into the frame memory 913.

On the other hand, in an inter-mode (inter-picture coding) for coding a picture indicated by the input picture signal as a P-picture or a B-picture, a motion vector is generated by the motion estimation unit 914, a predictive image is generated by the motion compensation unit 915, and a motion compensation error, which is a difference between an image of the macroblock indicated by the input picture signal and the predictive image, is calculated by the subtractor 903. Here, in the inter-mode, the switch 904 connects the motion compensation unit 915 to the subtractor 903. Furthermore, the motion estimation unit 914 searches from the decoded picture stored in the frame memory 913 for an image area that has the smallest difference compare to an image of the macroblock to be coded. In other words, in a case of a P-picture, the motion estimation unit 914 searches from preceding reference picture for the above image area, while in a case of a B-picture, the motion estimation unit 914 searches from preceding and following reference pictures for the above image area. Then, the motion estimation unit 914 calculates, as a motion vector, an amount of motion between the searched image area and the macroblock to be coded indicated by the input picture signal, and then outputs the motion vector. Furthermore, the motion estimation unit 914 outputs a prediction type of a macroblock, which indicates whether the picture to be referenced is positioned preceding, following, or preceding and following the picture to be coded. The motion compensation unit 915 calculates a predictive image from the motion vector and the prediction type that are outputted from the motion estimation unit 914, and outputs the prediction picture.

The motion compensation error outputted from the subtractor 903 is transformed into a frequency component by the orthogonal transformation unit 905, and then compressed and coded into a quantized value in quantization performed by the quantization unit 906. Coding is applied to the quantized value by the variable length coding unit 907 and the coded result becomes an output. Further, the quantized value obtained by the quantization unit 906 is decoded into a frequency component by the inverse quantization unit 908, decoded into a motion compensation error by the inverse orthogonal transformation unit 909, and added to the predictive image by the adder 910. As a result, a re-constructed image, that is the decoded macroblock, is generated and stored into the memory 901. In addition, the re-constructed image is also stored into the frame memory 911. Then, after re-constructed images of all macroblocks included in one picture are stored into the frame memory 911, the de-blocking filtering unit 912 applies de-blocking filtering for eliminating block distortion to each re-constructed image in an address order sequentially from a re-constructed image of a macroblock positioned at a top-left corner in the picture, and stores the processed re-constructed image into the frame memory 913.

Here, in a case where the filter code is 1, the de-blocking filtering unit 912 does not apply any processing to the re-constructed images and stores the re-constructed images into the frame memory 913.

Thus, the image decoding device 800 shown in FIG. 5 and the image encoding device 900 shown in FIG. 7 can perform the de-blocking filtering even if the decoding order is not the address processing order.

However, the image decoding device 800 shown in FIG. 5 and the image encoding device 900 shown in FIG. 7 have a problem, even if the decoding order is not the address processing order, that a processing speed becomes slow, since, prior to the de-blocking filtering, all macroblocks included in a picture are decoded and all decoded macroblocks (re-constructed images) are stored into the memory.

For example, in a case where a memory storing the re-constructed images is an external memory and the external memory is used also for other processing besides the image decoding, if all re-constructed images are stored into the external memory in the manner as described above, an amount of data stored in the external memory becomes large, so that a ratio of data transmitting to a whole decoding processing becomes high, which results in reduction of a time allocated to other processing. Therefore, in a case where a bus width of a bus connecting the image decoding device with the external memory is small, or where a processing performance of the image decoding device is low, there is a situation where the whole decoding processing requires more than a predetermined time period (an available time period for processing one frame), so that the image decoding cannot be performed smoothly.

Further, prior to the de-blocking filtering, all re-constructed images are stored into the memory, so that the decoding (processing until an image is re-constructed) and the de-blocking filtering cannot be performed by the pipelining (parallel processing) on a macroblock-by-macroblock basis. Still further, a next picture to be processed is coded or decoded using a picture that has been applied with de-blocking filtering, so that the decoding (processing until an image is re-constructed) and the de-blocking filtering cannot be performed by the pipelining (parallel processing) even on a picture-by-picture basis.

Thus, the present invention is conceived to solve the above problems, and an object of the present invention is to provide an image decoding device and an image encoding device which can eliminate block distortion and also can restrain decrease of a processing speed, even if an order of decoding blocks is changed.

### Means to Solve the Problem

In order to achieve the above object, the image decoding device according to the present invention, which decodes a coded picture on a block-by-block basis, includes: a decoding unit operable to sequentially decode each block included in the coded picture; a storage unit in which each block decoded by the decoding unit is stored; a filter unit operable to apply filtering processing to each block decoded by the decoding unit; a first executing unit operable to store the decoded block into the storage unit every time the block is decoded by the decoding unit, and to apply the filter processing to the block stored in the storage unit by the filter unit; a second executing unit operable to apply the filtering processing to the decoded block by the filter unit, every time the block is decoded by the decoding unit; and a switch control unit operable to switch between an operation performed by the first executing unit and an operation performed by the second executing unit. More specifically, the switch control unit switches between the operation performed by the first executing unit and the operation performed by the second executing unit, depending on an order of the blocks to be sequentially decoded by the decoding unit. For example, the switch control unit prohibits the operation performed by the first executing unit and permit the operation performed by the second executing unit, when the order of the blocks to be sequentially decoded by the decoding unit is a regular order of decoding the blocks continuously from a block positioned at an edge of the picture, and prohibits the operation performed by the second executing unit and permit the operation performed by the first executing unit, when the order of the blocks to be sequentially decoded by the decoding unit is not the regular order.

Thereby, in a case where an order of blocks to be sequentially decoded by the decoding unit is a regular order for decoding the blocks continuously from a block positioned at an edge of a picture, namely, an address decoding order, the second execution unit including, for example, a switch makes a filter unit apply filtering processing to each block every time the block is decoded by the decoding unit. As a result, the decoding and the applying of the filtering processing can be performed by the pipelining, which results in speeding up of a processing speed more compare to a case where, after each decoded block is stored into the storage unit, the filtering processing is applied to the block. Moreover, in this case, the block is not necessarily stored into the storage unit, so that an amount of data transmitted to the storage unit can be reduced in order to smoothly perform a whole processing. Moreover, in a case where an order of blocks to be sequentially decoded by the decoding unit is not the regular order, in other words, where the order is an address decoding order, the first execution unit including, for example, a switch makes the storage unit store each block every time the block is decoded by the decoding unit, and makes the filter unit apply the filtering processing to the block stored in the storage unit. As a result, even if the order of blocks to be sequentially decoded by the decoding unit is not the address decoding order, the filter unit can apply filtering processing to the block. Thus, according to the present invention, it is possible to eliminate block distortion and also to restrain decrease of a processing speed, even if an order of decoding each block is changed.

Further, the switch control unit may switch between the operation performed by the first executing unit and the operation performed by the second executing unit, depending on the number of the blocks to be decoded by the decoding unit within a predetermined time period. For example, the switch control unit prohibits the operation performed by the first executing unit and permit the operation performed by the second executing unit, when the number of the blocks to be decoded by the decoding unit within the predetermined time period is larger than a predetermined value, and prohibits the operation performed by the second executing unit and permit the operation performed by the first executing unit, when the number of the blocks is equal to or smaller than the predetermined value.

, The number of blocks to be decoded within a predetermined time period varies depending on profiles such as a main profile and a base line profile, so that a determination can be made, based on the number, as to whether an order of blocks to be sequentially decoded by the decoding unit is the regular order, or there is a possibility that the order is not the regular order. Thus, according to the present invention, the same effect as described above can be obtained by switching between an operation performed by the first execution unit and an operation performed by the second execution unit, based on the number of blocks. That is, even if the order of decoding each block is changed, it is possible to eliminate block distortion and also to restrain decrease of a processing speed.

Further, the switch control unit may switch between the operation performed by the first executing unit and the operation performed by the second executing unit, based on filter information which indicates a portion that is in the block and is to be applied with the filtering processing, when the order of the blocks to be sequentially decoded by the decoding unit is not a regular order of decoding the blocks continuously from a block positioned at an edge of the picture.

Thereby, even in a case, for example, where an order of blocks to be sequentially decoded is not the regular order, when a value of disable_deblocking_filter_idc as filter information is 2, in other words, when a slice boundary is not included in the targets to be applied with filtering processing, even if a plurality of slices included in one picture are decoded in any orders, the switch control unit makes the second execution unit execute an operation thereby performing the decoding and the applying of the filtering processing by the pipelining, so that it is possible to speed up the processing speed.

Further, the switch control unit may switch between the operation performed by the first executing unit and the operation performed by the second executing unit, depending on a type of a coded signal including the coded pictures. For example, the switch control unit prohibits the operation performed by the first executing unit and permit the operation performed by the second executing unit, when a determination is made, based on the type of the coded signal, that the blocks need to be decoded continuously from a block positioned at an edge of the picture, and prohibits the operation performed by the second executing unit and permit the operation performed by the first executing unit, when the determination is not able to be performed.

Depending on profiles such as a main profile and a base line profile indicated by coded signal, there is a case where a determination can be made that blocks need to be decoded continuously from a block positioned at an edge of a picture. Thus, in the same manner as described for the present invention, the same effect as described above can be obtained by switching between an operation performed by the first execution unit and an operation performed by the second execution unit, depending on a type of the coded signal, namely, a profile. That is, even if the order of decoding each block is changed, it is possible to eliminate block distortion and also to restrain decrease of a processing speed.

Further, the switch control unit may obtain an external signal which indicates whether or not the blocks need to be decoded continuously from a block positioned at an edge of the picture; prohibit the operation performed by the first executing unit and permit the operation performed by the second executing unit, when the external signal indicates that the blocks need to be decoded continuously; and prohibit the operation performed by the second executing unit and permit the operation performed by the first executing unit, when the external signal indicates that the blocks should not be decoded continuously.

When the arbitrary slice order is permitted, slices are not always decoded continuously from a slice positioned at an edge of a picture. Therefore, in the same manner as described for the present invention, the same effect as described above can be obtained by switching between an operation performed by the first execution unit and an operation performed by the second execution unit, depending on an external signal indicating whether or not the arbitrary slice order is permitted. That is, even if the order of decoding each block is changed, it is possible to eliminate block distortion and also to restrain decrease of a processing speed.

Note that the present invention can be realized not only as the above image decoding device, but also as an image encoding device which includes the same structure of the image decoding device, as a processing method regarding the devices, a program regarding the devices, a storage medium which stores the program, and an integrated circuit.

### Effect of the Invention

An image decoding device according to the present invention has effects of eliminating block distortion and of restraining decrease of a processing speed, even if an order of decoding each block is changed.

### Brief Description of Drawings

[FIG. 1] FIG. 1 is an explanatory diagram for explaining parts to which de-blocking filtering is applied.
[FIG. 2] FIG. 2 is an explanatory diagram for explaining calculation of filter strength, calculation of threshold values, and applying of filtering processing.
[FIG. 3A] FIG. 3A is an explanatory diagrams of a slice group.
[FIG. 3B] FIG. 3B is an explanatory diagram of another slice group.
[FIG. 3C] FIG. 3C is an explanatory diagram of still another slice group.
[FIG. 3D] FIG. 3D is a diagram showing slices included in a slice group.
[FIG. 4] FIG. 4 is an explanatory diagram for explaining pipelining.
[FIG. 5] FIG. 5 is a block diagram showing a structure of an image decoding device conforming to arbitrary slice order of H.264.
[FIG. 6] FIG. 6 is a flowchart showing a flow of processing performed by the above image decoding device.
[FIG. 7] FIG. 7 is a block diagram showing a structure of an image encoding device conforming to arbitrary slice order of H.264.
[FIG. 8] FIG. 8 is a block diagram showing a structure of an image decoding device according to the first embodiment of the present invention.
[FIG. 9] FIG. 9 is a flowchart showing a flow of processing performed by the image decoding device according to the first embodiment.
[FIG. 10] FIG. 10 is a flowchart showing a flow of processing performed by an image decoding device according to a variation of the firsts embodiment.
[FIG. 11] FIG. 11 is a flowchart showing a flow of processing performed by an image decoding device which determines a value of a filter code on a picture-by-picture basis.
[FIG. 12] FIG. 12 is a block diagram showing a structure of an image encoding device according to the second embodiment of the present invention.
[FIG. 13] FIG. 13 is a flowchart showing a flow of processing performed by an image encoding device according to the second embodiment.
[FIG. 14] FIG. 14 is a flowchart showing a flow of processing performed by an image encoding device according to the first variation of the second embodiment.
[FIG. 15] FIG. 15 is a flowchart showing a flow of processing performed by an image encoding device which determines a value of a filter code on a picture-by-picture basis.
[FIG. 16] FIG. 16 is a flowchart showing a flow of processing performed by an image encoding device according to the second variation of the second embodiment of the present invention.
[FIG. 17A] FIG. 17A is an explanatory diagram of a recording medium which stores a program causing a computer system to execute the image decoding device and the image encoding device according to the present invention. (third embodiment)
[FIG. 17B] FIG. 17B is another explanatory diagram of the recording medium which stores a program causing a computer system to execute the image decoding device and the image encoding device according to the present invention. (third embodiment)
[FIG. 17C] FIG. 17C is still another explanatory diagram of the recording medium which stores a program causing a computer system to execute the image decoding device and the image encoding device according to the present invention. (third embodiment)
[FIG. 18] FIG. 18 is a block diagram showing a whole structure of a content supplying system for realizing a content distribution service according to the fourth embodiment of the present invention.
[FIG. 19] FIG. 19 is a diagram showing a portable telephone which uses the image encoding device and the image decoding device according to the fourth embodiment.
[FIG. 20] FIG. 20 is a block diagram of the portable telephone according to the fourth embodiment.
[FIG. 21] FIG. 21 is a diagram showing an example of a digital broadcasting system according to the fourth embodiment.

### Numerical References

- 100: Image decoding device
- 101: Control unit
- 102, 120: Frame memory
- 103, 104, 117: Switch
- 111: Variable length decoding unit
- 112: Inverse quantization unit
- 113: Inverse orthogonal transformation unit
- 114: Memory
- 115: Intra-picture prediction unit
- 116: Adder
- 119: De-blocking filtering unit
- 120: Frame memory
- 121: Motion compensation unit
- 200: Image encoding device
- 201: Control unit
- 202, 223: Frame memory
- 203, 204, 214: Switch
- 205: Setting unit
- 211: Memory
- 212: Intra-picture prediction unit
- 213: Subtractor
- 215: Orthogonal transformation unit
- 216: Quantization unit
- 217: Variable length coding unit
- 218: Inverse quantization unit
- 219: Inverse orthogonal transformation unit
- 220: Adder
- 222: De-blocking filtering unit
- 224: Motion estimation unit
- 225: Motion compensation unit

### Best Mode for Carrying Out the Invention

The following describes embodiments according to the present invention with reference to the drawings.

### (First Embodiment)

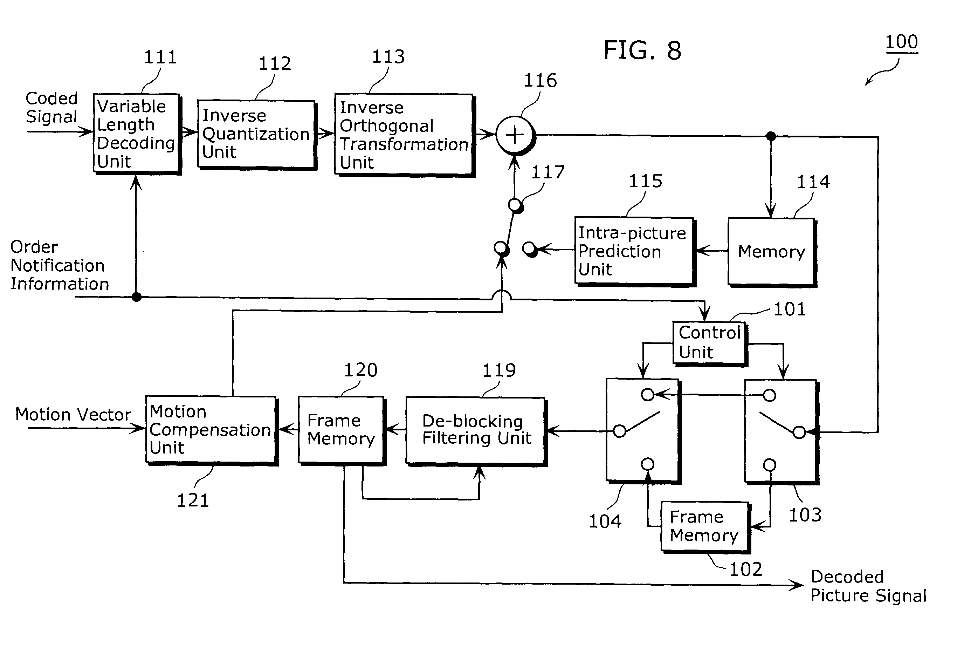

FIG. 8 is a block diagram showing a structure of an image decoding device 100 according to the first embodiment of the present invention.

The image decoding device 100 is an image decoding device which can eliminate block distortion and restrain decrease of a processing speed even if an order of decoding each block is changed, and the image decoding device 100 includes a variable length decoding unit 111, an inverse quantization unit 112, an inverse orthogonal transformation unit 113, a memory 114, an intra-picture prediction unit 115, an adder 116, a switch 117, a de-blocking filtering unit 119, a frame memory 120, a motion compensation unit 121, a control unit 101, a frame memory 102, a switch 103, and a switch 104.

The variable length decoding unit 111 performs variable length decoding for macroblocks, for each macroblock included in a coded picture indicated by coded signal, and outputs a quantized value, that is a result of the processing, to the inverse quantization unit 112.

Here, the variable length decoding unit 111 obtains order notification information that indicates an order of decoding slices and macroblocks, and applies variable length decoding to each macroblock based on the order indicated in the order notification information. The order notification information indicates that the order of decoding is an address processing order or that the order of decoding is arbitrary. Hereinafter, the arbitrary decoding order is referred to as an indefinite order.

Therefore, if the order notification information indicates the address processing order, the variable length decoding unit 111 applies variable length decoding to slices in the coded picture indicated by the coded signal in an order sequentially from a slice whose starting macroblock has an address having a smaller value compared to other slices. Then, in each slice, the variable length decoding unit 111 applies variable length decoding to macroblocks in the slice in an order from the starting macroblock and then sequentially from a macroblock whose address is smaller compared to other macroblocks. On the other hand, if the order notification information indicates the indefinite order, the variable length decoding unit 111 applies variable length decoding to macroblocks according to a predetermined regulation in an order that is the same as the above address processing order or different from the above address processing order.

The inverse quantization unit 112 applies inverse quantization to the quantized value outputted from the variable length decoding unit 111 in order to transform the quantized value into a frequency component.

The inverse orthogonal transformation unit 113 transforms, in an intra-mode in which the picture to be coded is an I-picture, the frequency component outputted from the inverse quantization unit 112 into a prediction error that is image data, while in an inter-mode in which the picture to be coded is a P-picture or a B-picture, the inverse orthogonal transformation unit 113 transforms the frequency component into a motion compensation error that is image data.

The switch 117 connects, in the intra-mode, the intra-prediction unit 115 to the adder 116, and on the other hand connects, in the inter-mode, the motion compensation unit 121 to the adder 116.

The adder 116 adds, in the intra-mode, the prediction error to a predictive image outputted from the intra-prediction unit 115, thereby decoding the coded macroblock indicated by the coded signal into a re-constructed image. On the other hand, the adder 116 adds, in the inter-mode, the motion compensation error to a motion compensation image outputted from the motion compensation unit 121, thereby decoding the coded macroblock indicated by the coded signal into a re-constructed image.

The memory 114 accumulates the re-constructed image outputted from the adder 116.

The intra-picture prediction unit 115 retrieves, from a plurality of the re-constructed images stored in the memory 114, respective re-constructed images of: a macroblock positioned on the immediately left of; a macroblock positioned immediately above; a macroblock on the immediately upper left of; and a macroblock positioned on the immediately upper right of, a macroblock to be decoded. Then, the intra-picture prediction unit 115 generates a predictive image of the macroblock to be decoded, using these re-constructed images.

The control unit 101 obtains the above-described order notification information and controls the switch 103 and the switch 104 based on the order notification information.

More specifically, if the order notification information indicates the address processing order, the control unit 101 controls the switch 103 and the switch 104 in order to connecting the de-blocking filtering unit 119 directly to the adder 116. On the other hand, if the order notification information indicates the indefinite order, the control unit 101 firstly controls the switch 103 in order to connect the frame memory 102 to the adder 116. The frame memory 102 connected to the adder 116 sequentially accumulates the re-constructed images outputted from the adder 116. Then, after the frame memory 102 accumulates all re-constructed images of one picture, the control unit 101 controls the switch 104 in order to connect the frame memory 102 to the de-blocking filtering unit 119.

When the de-blocking filtering unit 119 is connected to the adder 116 using the switch 103 and the switch 104, the de-blocking filtering unit 119 applies de-blocking filtering to each re-constructed image, every time the adder 116 outputs the re-constructed image. On the other hand, when the de-blocking filtering unit 119 is connected to the frame memory 102 using the switch 104, the de-blocking filtering unit 119 applies de-blocking filtering to all re-constructed images of one picture that are stored in the frame memory 102, in an order from a macroblock positioned at a top-left corner in the picture and then sequentially from a macroblock whose address is smaller compare to other macroblocks.

Then, the de-blocking filtering unit 119 sequentially stores the re-constructed images applied with the de-blocking filtering, into the frame memory 120. Thereby, in the frame memory 120, re-constructed images of one picture are stored as a decoded picture. Furthermore, such a decoded picture is outputted as a decoded picture signal onto a monitor or the like.

Note that, when the de-blocking filtering is applied to a re-constructed image (macroblock) to be processed, the de-blocking filtering unit 119 obtains, from the frame memory 120, the re-constructed images that are positioned on the immediately left of and immediately above the re-constructured image and that have been already applied with de-blocking filtering, and uses the obtained re-constructed images.

The motion compensation unit 121 obtains the decoded picture stored in the frame memory 120 as a reference picture, and also obtains a motion vector. Then, the motion compensation unit 121 generates an image area that is in the reference picture and indicated by the motion vector, as a motion compensation image of the macroblock to be decoded, and outputs the motion compensation image.

As described above, the image decoding device 100 according to the first embodiment performs, if the order notification information indicates the address processing order, the decoding (processing until a re-constructed image is generated) and the de-blocking filtering by pipelining on a macroblock-by-macroblock basis. On the other hand, if the order notification information indicates the indefinite order, the image decoding device 100 decodes macroblocks, and after re-constructed images of one picture are stored into the frame memory 102, the image decoding device 100 performs de-blocking filtering.

Here, as the above-described order notification information, profile information in the H.264 is used, for example.

More specifically, when the profile information included in coded signal indicates a base line profile or an extended profile, the profile information indicates that an order of sequentially decoding macroblocks is an indefinite order. On the other hand, when the profile information indicates a main profile, the profile information indicates that an order of sequentially decoding macroblocks is the address processing order.

In the base line profile and the extended profile the order of sequentially decoding macroblocks is set to the indefinite order, which is not only because the arbitrary slice order is permitted in these profiles but also because the number of slice groups can be set to range from one to seven in these profiles. This means that, when the number of slice groups is plural, as shown in FIG. 3B for example, macroblocks, which are positioned on the immediately left of and immediately above a macroblock to be decoded, sometimes belong to slice groups that are different from a slice group of the macroblock to be decoded. In such a case, in decoding of the macroblock to be decoded, there is a possibility that the macroblocks, which are positioned on the immediately left of and immediately above the macroblock to be decided, have not yet been decoded, so that the order of sequentially decoding the macroblocks becomes the indefinite order.

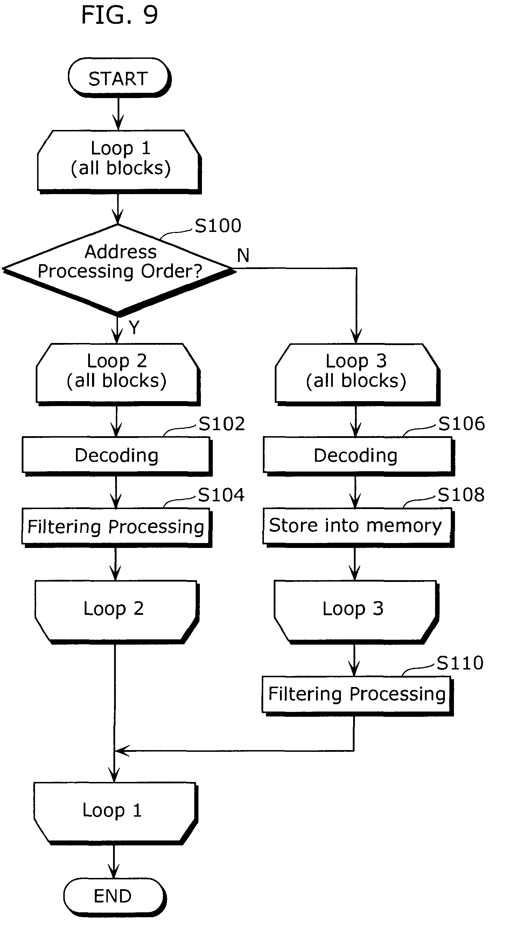

FIG. 9 is a flowchart showing processing performed by the image decoding device 100 according to the first embodiment.

The image decoding device 100 firstly determines, regarding a picture to be decoded, whether or not the order notification information indicates the address processing order (Step S100). If the determination is made that the order notification information indicates the address processing order (Y at Step S100), then the image decoding device 100 applies decoding to each macroblock to be decoded in the address processing order (Step S102), and applies de-blocking filtering to each decoded macroblock (re-constructed image) (Step S104). In other words, the image decoding device 100 performs the decoding at the Step S102 and the de-blocking filtering at the Step S104 by pipelining, and repeats these processing for every macroblock to be decoded (Loop 2).

On the other hand, if the determination is made that the order notification information does not indicate the address processing order, in other words, that the order notification information indicates an indefinite order (N at Step S100), then the image decoding device 100 decodes each macroblock to be decoded in the predetermined order (Step S106), and sequentially stores the decoded macroblocks (re-constructed images) into the frame memory 102 (Step S108). In this manner, the image decoding device 100 repeats the decoding at the Step S106 and the storing at the Step S108 for every macroblock to be decoded (Loop 3). Then, the image decoding device 100 applies de-blocking filtering to re-constructed images of one picture which are stored in the frame memory 102 in an order from a re-constructed image positioned at a top-left corner in the picture and then sequentially from a re-constructed image whose address is smaller compared to other re-constructed images (Step S110).

The image decoding device 100 performs the above processing from the Step S100 to the Step S110 for all coded pictures indicated by the coded signal (Loop 1).

As described above, according to the first embodiment, in the main profile in which use of a plurality of slice groups and the arbitrary slice order are prohibited, it is ensured that an order of sequentially decoding macroblocks is an order of smaller address as priority (address decoding order), so that, even if all of macroblocks are not decoded into the re-constructed images, it is possible to apply de-blocking filtering to macroblocks which have been sequentially decoded into re-constructed images and not yet been applied with the deblocking filtering. Therefore, a ratio of data transmitting to a whole decoding processing can be lowered. Furthermore, the de-blocking filtering, which is applied to the sequentially decoded a re-constructed image, can be performed in parallel to the processing until a re-constructed image is generated (decoding). Thereby, it is possible to speed up a speed of the processing.

On the other hand, in the base line profile in which use of a plurality of slice groups and the arbitrary slice order are permitted, it is not ensured that an order of sequentially decoding macroblocks is the address decoding order. In the first embodiment, even in such base line profile, by sequentially storing the re-constructed images into the frame memory 102, it is possible to apply the de-blocking filtering to the re-constructed images.

### (Variation)

Here, a variation of the first embodiment is described.

While the image decoding device 100 of the first embodiment determines, based on the order notification information, whether or not the decoding and the de-blocking filtering are performed by the pipelining, an image decoding devoce of this variation makes the determination based on the order notification information and the filter code (disable_deblocking_filter_idc).

If the order notification information indicates the address processing order, the image decoding device according to the variation performs the same processing as described above, but if the order notification information indicates the indefinite order, the image decoding device performs processing corresponding to the filter code.

More specifically, if the filter code is 0, the image decoding device according to the variation performs the same processing as described for the case where the order notification information indicates the indefinite order in the first embodiment. This means that the control unit of the image decoding device controls the switch 103 in order to connect the frame memory 102 to the adder 116, so that re-constructed images of one picture are stored into the frame memory 102. Then, the control unit controls the switch 104 in order to connect the de-blocking filtering unit 119 to the frame memory 102. As a result, the de-blocking filtering unit 119 applies de-blocking filtering to the re-constructed images accumulated in the frame memory 102. Thereby, if the filter code is 0, edges of all macroblocks (re-constructed images) are applied with the de-blocking filtering.

If the filter code is 1, the control unit of the image decoding device according to the variation controls the switch 103 and the switch 104 in order to connect the de-blocking filtering unit 119 directly to the adder 116. Then, the control unit prevents the de-blocking filtering unit 119 from performing de-blocking filtering. As a result, the re-constructed image outputted from the adder 116 passes through the de-blocking filtering unit 119 via the switch 103 and the switch 104, and stored into the frame memory 120. Thereby, if the filter code is 1, no edge of all macroblocks (re-constructed images) is applied with the de-blocking filtering.

If the filter code is 2, the control unit of the image decoding device according to the variation controls, in the same manner as described above, the switch 103 and the switch 104 in order to connect the de-blocking filtering unit 119 directly to the adder 116. Then, the control unit prevents the de-blocking filtering unit 119 from applying de-blocking filtering to slice boundaries. As a result, the de-blocking filtering unit 119 applies de-blocking filtering to edges (edges of a block consisting of 4 x 4 pixels in a re-constructed image, for example) except a slice boundary, if the re-constructed image (macroblock) outputted from the adder 116 is positioned at the slice boundary. On the other hand, the de-blocking filtering unit 119 applies de-blocking filtering to all edges of a re-constructed image that is outputted from the adder 116 and not positioned at a slice boundary, namely, to the vertical edges and horizontal edges shown in FIG. 1.

Thereby, if the filter code is 2, for each macroblock (re-constructed image), the decoding and the de-blocking filtering are performed by the pipelining.

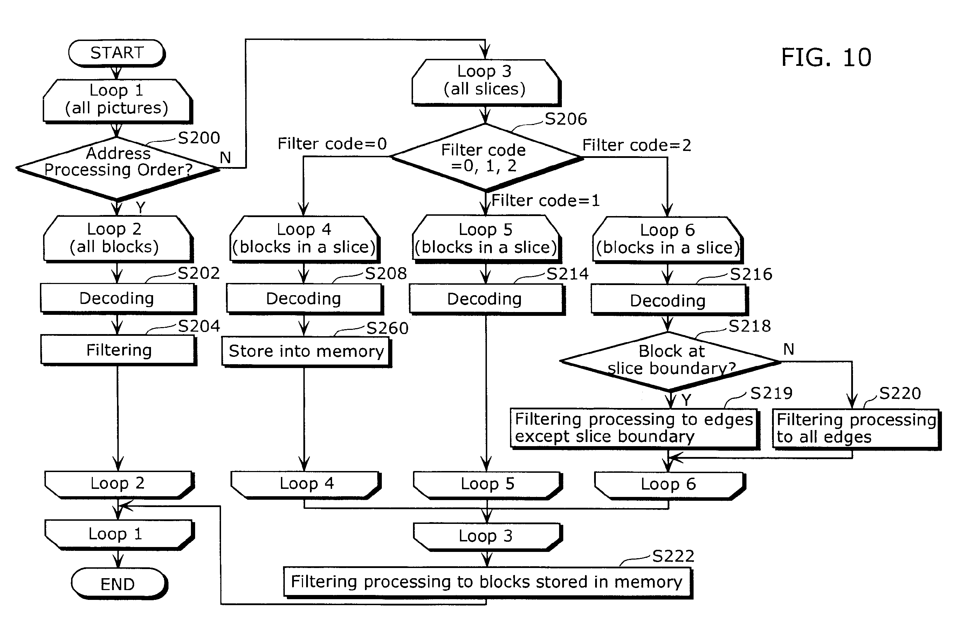

FIG. 10 is a flowchart showing a flow of processing performed by the image decoding device according to the variation.

The image decoding device according to the variation firstly determines, regarding a picture to be decoded, whether or not order notification information indicates the address processing order (Step S200). If the determination is made that the address processing order is indicated (Y at Step S200), then the image decoding device applies decoding to each macroblock to be decoded in the address processing order (Step S202), and applies de-blocking filtering to the decoded macroblock (re-constructed image) (Step S204). In other words, the image decoding device performs the decoding at the Step S202 and the de-blocking filtering at the Step S204 by pipelining, and repeats these processing for every macroblock to be decoded (Loop 2).

On the other hand, if the determination is made that the order notification information does not indicate the address processing order, in other words, that the order notification information indicates an indefinite order (N at Step S200), then the image decoding device further determines whether or not a value of a filter code of each slice is 0, 1, or 2 (Step S206). Here, if the value of the filter code is 0, then the image decoding device decodes each macroblock to be decoded in the predetermined order (Step S208), and sequentially stores the decoded macroblocks (re-constructed images) into the frame memory 102 (Step S210). In this manner, the image decoding device repeats the decoding at the Step S208 and the storing at the Step S210 for every macroblock in the slice (Loop 4).

On the other hand, if the determination is made at the Step S206 that the value of the filter code is 1, then the image decoding device decodes each macroblock to be decoded in the predetermined order (Step S214). In this manner, the image decoding device repeats the decoding at the Step S214 for every macroblock in the slice (Loop 5).

Moreover, if the determination is made at the Step S206 that the value of the filter code is 2, then the image decoding device decodes each macroblock to be decoded (Step S216), and determines whether or not the macroblock is positioned at a slice boundary (Step S218). Then, if the determination is made that the macroblock is positioned at a slice boundary (Y at Step S218), then the image decoding device applies de-blocking filtering to edges except the slice boundary in the decoded macroblock (re-constructed image) (Step S219), and on the other hand if the determination is made that the macroblock is not positioned at a slice boundary (N at Step S218), then the image decoding device applies de-blocking filtering to all edges in the decoded macroblock (re-constructed image) (Step S220). In other words, the image decoding device performs the decoding at the Step S216 and the de-blocking filtering at the Steps S219 and S220 by pipelining. In this manner, the image decoding device repeats the processing from the Step S216 to the Step S220 for all macroblocks in the slice (Loop 6).

The image decoding device performs the above processing from the Step S206 to the Step S220 for all slices included in the picture to be decoded (Loop 3), and applies de-blocking filtering to each re-constructed image that is stored into the frame memory 102 at the Step S210, in a order of smaller address as priority (Step S222). Then, the image decoding device performs the above processing from the Step S200 to the Step S222 for all coded pictures indicated by the coded signal (Loop 1).

Note that the above has described that the image decoding device determines the value of the filter code for each slice, but the determination can be made for each picture.

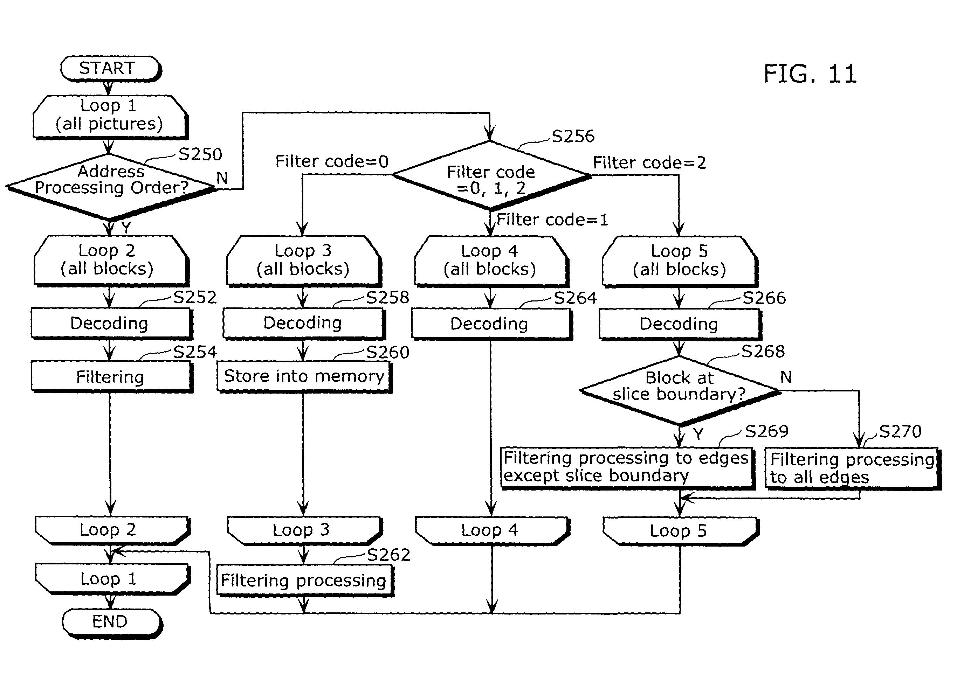

FIG. 11 is a flowchart showing a flow of processing performed by an image decoding device which determines the value of the filter code for each picture.

The image decoding device firstly determines, regarding a picture to be decoded, whether or not order notification information indicates the address processing order (Step S250). If the determination is made that the address processing order is indicated (Y at Step S250), then the image decoding device applies decoding to each macroblock to be decoded in the address processing order (Step S252), and applies de-blocking filtering to the decoded macroblock (re-constructed image) (Step S254). In other words, the image decoding device performs the decoding at the Step S252 and the de-blocking filtering at the Step S254 by pipelining, and repeats these processing for every macroblock of the picture to be decoded (Loop 2).

On the other hand, if the determination is made that the order notification information does not indicate the address processing order, in other words, that the order notification information indicates an indefinite order (N at Step S250), then the image decoding device further determines whether or not a value of a filter code is 0, 1, or 2 (Step S256). Here, if the value of the filter code is 0, then the image decoding device decodes each macroblock to be decoded in the predetermined order (Step S258), and sequentially stores the decoded macroblocks (re-constructed images) into the frame memory 102 (Step S260). In this manner, the image decoding device repeats the decoding at the Step S258 and the storing at the Step S260 for all macroblocks in the picture to be decoded (Loop 3). Then, the image decoding device applies de-blocking filtering to re-constructed images of one picture which are accumulated in the frame memory 102, in an order from a re-constructed image positioned at a top-left corner in the picture and then sequentially from a re-constructed picture whose address is smaller compared to other re-constructed images (Step S262).

On the other hand, if the determination is made at the Step S256 that the value of the filter code is 1, then the image decoding device decodes each macroblock to be decoded in the predetermined order (Step S264). In this manner, the image decoding device repeats the decoding at the Step S264 for all macroblocks in the picture to be decoded (Loop 4).

Moreover, if the determination is made at the Step S256 that the value of the filter code is 2, then the image decoding device decodes each macroblock to be decoded (Step S266), and determines whether or not the macroblock is positioned at a slice boundary (Step 5268). Then, if the determination is made that the macroblock is positioned at a slice boundary (Y at Step S268), then the image decoding device applies de-blocking filtering to edges except the slice boundary in the decoded macroblock (re-constructed image) (Step S269), and on the other hand if the determination is made that the macroblock is not positioned at a slice boundary (N at Step S268), then the image decoding device applies de-blocking filtering to all edges in the decoded macroblock (re-constructed image) (Step S270). In other words, the image decoding device performs the decoding at the Step S266 and the de-blocking filtering at the Steps S269 and S270 by pipelining. In this manner, the image decoding device repeats the processing from the Step S266 to the Step S270 for all macroblocks in the picture to be decoded (Loop 5).

The image decoding device performs the above processing from the Step S250 to the Step S270 for all coded pictures indicated by the coded signal (Loop 1).

As described above, if it is obvious that the filter code is fixed for each picture and does not vary depending on each slice, the image decoding device performs processing without the determination of the value of the filter code of each slice.

Note that, in the variation of the first embodiment, the control unit 101 controls the switch 104 in order to connect the de-blocking filtering unit 119 to the frame memory 102, after all re-constructed images of one picture have been stored into the frame memory 102, but the control unit 101 may control the switch 104 before all re-constructed images of one picture are stored.

More specifically, the control unit 101 controls the switch 104, if one or more macroblocks, which have already been applied with de-blocking filtering and are necessary for de-blockinig filtering of the re-constructed image (the macroblock to be filtered) stored in the frame memory 102, are stored in the frame memory 120. Thereby, the control unit 101 makes the de-blocking filtering unit 119 execute de-blocking filtering for the macroblock to be filtered.

Moreover, even if the macroblock to be filtered does not require such filtered macroblocks, the control unit 101 controls the switch 104 and makes the de-blocking filtering unit 119 execute de-blocking filtering for the macroblock to be filtered.

More specifically, the filtered macroblocks which are necessary for the macroblock to be filtered are: (1) a macroblock positioned on the immediately left of the macroblock to be filtered, if the macroblock to be filtered is positioned at a top edge in the picture; (2) macroblocks positioned immediately above and on the immediately right of the macroblock to be filtered, if the macroblock to be filtered is positioned at a left edge in the picture; or (3) macroblocks positioned on the immediately left of, immediately above, and on the immediately upper-right of the macroblock to be filtered. Furthermore, the macroblock to be filetered which does not require any filtered macroblocks is a macroblock positioned at a top-left corner in the picture.

Even in the above case, it is possible to sequentially apply the de-blocking filtering and thereby to increase the number of the de-blocking filtering which can be performed in parallel to the processing for generating a re-constructed image (decoding).

Note that, in a case where decoding in the H.264 is macroblock adaptive frame-field decoding, the macroblock immediately above, the macroblock on the immediately upper-right of, and the macroblock on the immediately left of the macroblok to be filtered can be assumed to be a pair of macroblocks immediately above, a pair of macroblocks on the immediately upper-right of, and a pair of macroblocks on the immediately left of the macroblok to be filtered. Thereby the same effect as described above can be obtained.

Note also that in the first embodiment and the variation thereof, as information (order notification information) indicating whether or not an order of macroblocks to be sequentially decoded is the address decoding order, information of a profile included in a stream (coded signal) is used, but it is also possible to obtain, from the outside, the information indicating whether or not an order of macroblocks to be sequentially decoded is the address decoding order.

For example, in a case of a base line profile, the order of macroblocks to be sequentially decoded is generally an indefinite order, but, even for the base line profile, in a case where only one segment is broadcast, use of a plurality of slices and the arbitrary slice order are not permitted, so that the order of macroblocks to be sequentially decoded becomes the address decoding order.

This means that it is not possible to properly determine, using only the profile information, whether the order of macroblocks to be sequentially decoded is the address decoding order or the indefinite order. Furthermore, information indicating whether or not the arbitrary slice order is used does not exist in the stream, so that it is not possible to determine, using only the information in the stream, whether or not the order of macroblocks to be sequentially decoded is the address decoding order.

Therefore, the information indicating whether or not the order of macroblocks to be sequentially decoded is the address decoding order, namely, the information indicating whether or not the arbitrary slice order is permitted, is obtained from the outside. Thereby, the image decoding device can properly determine whether or not the order of macroblocks to be sequentially decoded is the address decoding order. That is, the number of situations that the order is determined as the address decoding order is increased compared to the case where the determination regarding the address decoding order is made using only the profile information. As a result, when the determination is made that the order is the address decoding order, de-blocking filtering can be applied to macroblocks which have been sequentially decoded but not yet applied with de-blocking filtering, so that a ratio of data transmitting to a whole decoding processing can be lowered. In addition, the de-blocking filtering can be performed in parallel to the processing for generating a re-constructed image (decoding). Thereby, the processing is speeded up, eventually reducing electric power consumption, which can realize a long-time decoding. This is suitable for a case where a long-time use such as digital broadcasting.

Note also that each of the first embodiment and the variation thereof includes the frame memory 102 which stores re-constructed images prior to the de-blocking filtering, and the frame memory 913 which stores re-constructed images after the de-blocking filtering, but the two memories may be structured as one frame memory.

Note also that, in the first embodiment and the variation thereof, the profile information is uses as the order notification information, and depending on the profile information the switch 103 and the switch 104 are controlled, but it is also possible to control the switch 103 and the switch 104 depending on the number of macroblocks to be decoded within a predetermined time period.

For example, in a case of a base line profile, the number of macroblocks to be decoded within a predetermined time period is smaller compared to a case of a main profile. Therefore, it is possible to determine that a profile indicated by the coded signal is the base line profile, if the number of the macroblocks is equal to or less than a predetermined value, and determine that a profile indicated by the coded signal is the main profile, if the number of the macroblocks is more than the predetermined value.

Therefore, even if the switch 103 and the switch 104 is controlled depending on the number of macroblocks to be decoded within a predetermined time period, the same effect as described above can be obtained.

Note also that, in the first embodiment and the variation thereof, as shown in FIG. 9 and FIG. 10, the determination whether or not the decoding order is the address processing order is made on a picture-by-picture basis, but the determination may be made on a slice-by-slice basis or on a sequence-by-sequence basis, and the determination may be made only once when the processing for coded signal starts.

### (Second Embodiment)

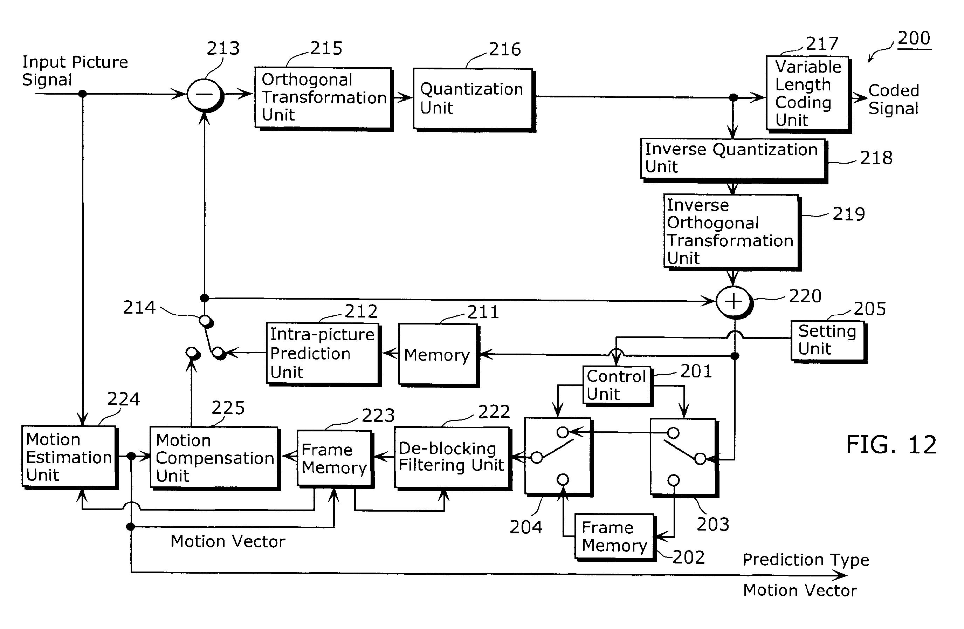

FIG. 12 is a block diagram showing a structure of an image encoding device 200 according to the second embodiment of the present invention.

The image encoding device 200 is an image decoding device which can eliminate block distortion and restrain decrease of a processing speed even if an order of coding and decoding performed on a block-by-block basis is changed, and the image encoding device 200 includes a memory 211, an intra-picture prediction unit 212, a subtractor 213, a switch 214, an orthogonal transformation unit 215, a quantization unit 216, a variable length coding unit 217, an inverse quantization unit 218, an inverse orthogonal transformation unit 219, an adder 220, a de-blocking filtering unit 222, a frame memory 223, a motion estimation unit 224, a motion compensation unit 225, a control unit 201, a frame memory 202, a switch 203, a switch 204, and a setting unit 205.

The subtractor 213 calculates a difference between an image of a macroblock indicated by input picture signal and a predictive image obtained via the switch 214, and a prediction error, that is a result of the calculation, is outputted.

The orthogonal transformation unit 215 transforms the prediction error calculated by the subtractor 213 into a frequency component.

The quantization unit 216 quantizes the frequency component outputted from the orthogonal transformation unit 215, and compresses and codes the frequency component into a quantized value.

The variable length coding unit 217 applies variable length coding to the quantized value outputted from the quantization unit 216, and outputs the coded result as coded signal.

The inverse quantization unit 218 applies inverse quantization to the quantized value outputted from the quantization unit 216 in order to transform the quantized value into a frequency component.

The inverse orthogonal transformation unit 219 transforms the frequency component outputted from the inverse quantization unit 218 into a prediction error that is image data.

The adder 220 adds the prediction error outputted from the inverse orthogonal transformation unit 219 to the predictive image obtained via the switch 214, thereby outputting a re-constructed image that is the decoded macroblock.

The memory 211 accumulates the re-constructed image outputted from the adder 220.

The switch 214 connects the intra-picture prediction unit 212 to the subtractor 213 in the intra-mode, and connects the motion compensation unit 225 to the subtractor 213 in the inter-mode.

The intra-picture prediction unit 212 retrieves, from the re-constructed images stored in the memory 211, respective re-constructed images of: a macroblock positioned on the immediately left of; a macroblock positioned immediately above; a macroblock positioned on the immediately upper left of; a macroblock positioned on the immediately upper right of, a macroblock positioned to be coded. Then, the intra-picture prediction unit 212 generates a predictive image of the macroblock to be coded, using these re-constructed images.

The setting unit 205 sets coding conditions, based on an operation by a user, a predetermined processing method, or the like, and notifies the coding conditions to the control unit 201.

Here, the above-described coding conditions indicate a profile in the H.264, for example.

More specifically, if the coding conditions indicate a base line profile or an extended profile, the coding conditions indicate that an order of macroblocks to be sequentially coded and decoded is an indefinite order. On the other hand, if the coding conditions indicate a main profile, the coding conditions indicate that an order of macroblocks to be sequentially coded and decoded is the address processing order.

The control unit 201 controls the switch 203 and the switch 204, based on the coding conditions set by the setting unit 205.

If the coding conditions indicate the address processing order, the control unit 201 controls the switch 203 and the switch 204 in order to connecting the de-blocking filtering unit 222 directly to the adder 220. On the other hand, if the coding conditions indicate the indefinite order, the control unit 201 firstly controls the switch 203 in order to connect the frame memory 202 to the adder 220. The frame memory 202 connected to the adder 220 sequentially accumulates the re-constructed images outputted from the adder 220. Then, after the frame memory 202 accumulates all re-constructed images of one picture, the control unit 201 controls the switch 204 in order to connect the frame memory 202 to the de-blocking filtering unit 222.

When the de-blocking filtering unit 222 is connected to the adder 220 using the switch 203 and the switch 204, the de-blocking filtering unit 222 applies de-blocking filtering to each re-constructed image, every time the adder 220 outputs the re-constructed image. On the other hand, when the de-blocking filtering unit 222 is connected to the frame memory 202 using the switch 204, the de-blocking filtering unit 222 applies de-blocking filtering to all re-constructed images of one picture that are acculumated in the frame memory 202, in an order from a macroblock positioned at a top-left corner in the picture and then sequentially from a macroblock whose address is smaller compare to other macroblocks.

Then, the de-blocking filtering unit 222 stores the re-constructed images applied with the de-blocking filtering, into the frame memory 223. Thereby, in the frame memory 223, re-constructed images of one picture are stored as a decoded picture.

Note that, when the de-blocking filtering is applied to a re-constructed image (macroblock) to be processed, the de-blocking filtering unit 222 obtains, from the frame memory 223, the re-constructed images to be processed that are positioned on the immediately left of and immediately above the re-constructed image and that have been already applied with de-blocking filtering, and uses the obtained re-constructed images.

The motion compensation unit 224 refers, in the inter-mode, the decoded picture stored in the frame memory 223 as a reference picture, thereby detecting motion of the image of the macroblock to be coded which is indicated by the input picture signal, and outputs a motion vector, that is a result of the detecting, into the motion compensation unit 225 and the frame memory 223. Furthermore, the motion estimation unit 914 outputs, in addition to the motion vector, a prediction type of the macroblock which indicates that the reference picture is positioned preceding, following, or preceding and following the picture to be coded.

The motion compensation unit 225 obtains the decoded picture stored in the frame memory 223 as a reference picture, and obtains the motion vector outputted from the motion estimation unit 224. Then, the motion compensation unit 121 generates an image area that is in the reference picture and indicated by the motion vector, as a predictive image of the macroblock to be coded, and outputs the predictive image.

As described above, the image encoding device 200 according to the second embodiment performs, if the coding conditions indicate the address processing order, the coding, the decoding, and the de-blocking filtering by pipelining on a macroblock-by-macroblock basis. On the other hand, if the coding conditions indicate the indefinite order, the image decoding device 200 decodes each coded macroblock, and after re-constructed images of one picture are stored into the frame memory 202, the image encoding device 200 performs de-blocking filtering.

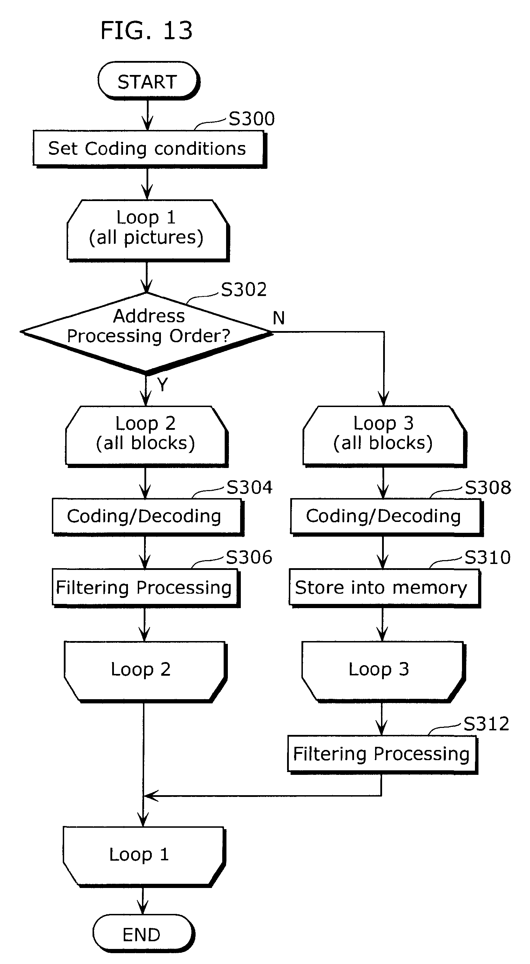

FIG. 13 is a flowchart showing a flow of processing performed by the image encoding device 200 according to the second embodiment.

The image encoding device 200 firstly sets coding conditions (Step S300). Then, the image encoding device 200 determines, regarding a picture to be coded, whether or not the coding conditions indicate the address processing order (Step S302). If the determination is made that the coding conditions indicate the address processing order (Y at Step S302), then the image encoding device 200 applies coding and decoding to each macroblock to be coded in the address processing order (Step S304), and applies de-blocking filtering to each decoded macroblock (re-constructed image) (Step S306). In other words, the image encoding device 200 performs the coding and decoding at the Step S304 and the de-blocking filtering at the Step S306 by pipelining, and repeats these processing for all macroblocks in the picture to be coded (Loop 2).

On the other hand, if the determination is made that the coding conditions do not indicate the address processing order, in other words, that the coding conditions indicate an indefinite order (N at Step S302), then the image encoding device 200 codes and decodes each macroblock to be coded in the predetermined order (Step S308), and sequentially stores the decoded macroblocks (re-constructed images) into the frame memory 202 (Step S310). In this manner, the image encoding device 200 repeats the coding and decoding at the Step S306 and the storing at the Step S310 for all macroblocks in the picture to be coded (Loop 3). Then, the image encoding device 200 applies de-blocking filtering to re-constructed images of one picture which are acculumated in the frame memory 202 in an order from a re-constructed image positioned at a top-left corner in the picture and then sequentially from a re-constructed image whose address is smaller compared to other re-constructed images (Step S312).

The image encoding device 200 performs the above processing from the Step S300 to the Step S312 for all pictures indicated by the coded signal (Loop 1).

### (First Variation)

Here, the first variation of the second embodiment is described.

While the image encoding device 200 of the second embodiment determines, based on only the coding conditions, whether or not the coding, the decoding, and the de-blocking filtering are performed by the pipelining, an image encoding device of this variation makes the determination based on the coding conditions and the filter code (disable_deblocking_filter_idc).

If the coding conditions indicate the address processing order, the image encoding device according to the first variation of the second embodiment performs the same processing as described in the second embodiment, but if the coding conditions indicate the indefinite order, the image encoding device performs processing corresponding to the filter code.

More specifically, if the filter code is 0, the image encoding device according to the first variation of the second embodiment performs the same processing as described for the case where the coding conditions indicate the indefinite order in the second embodiment. This means that the control unit of the image encoding device controls the switch 203 in order to connect the frame memory 202 to the adder 220, so that re-constructed images of one picture are stored into the frame memory 202. Then, the control unit controls the switch 204 in order to connect the frame memory 202 to the de-blocking filtering unit 222. As a result, the de-blocking filtering unit 222 applies de-blocking filtering to the re-constructed images accumulated in the frame memory 202. Thereby, if the filter code is 0, edges of all macroblocks (re-constructed images) are applied with the de-blocking filtering.

If the filter code is 1, the control unit of the image encoding device according to the first variation of the second embodiment controls the switch 203 and the switch 204 in order to connect the de-blocking filtering unit 222 directly to the adder 220. Then, the control unit prevents the de-blocking filtering unit 222 from performing de-blocking filtering. As a result, the re-constructed image outputted from the adder 220 passes through the de-blocking filtering unit 222 via the switch 203 and the switch 204, and stored into the frame memory 223. Thereby, if the filter code is 1, no edge of all macroblocks (re-constructed images) is applied with the de-blocking filtering.

If the filter code is 2, the control unit of the image encoding device according to the first variation of the second embodiment controls, in the same manner as described above, the switch 203 and the switch 204 in order to connect the de-blocking filtering unit 222 directly to the adder 220. Then, the control unit prevents the de-blocking filtering unit 222 from applying de-blocking filtering to slice boundaries. As a result, the de-blocking filtering unit 222 applies de-blocking filtering to edges (edges of a block consisting of 4 x 4 pixels in a re-constructed image, for example) except a slice boundary, if the re-constructed image (macroblock) outputted from the adder 220 is positioned at the slice boundary. On the other hand, the de-blocking filtering unit 222 applies de-blocking filtering to all edges of a re-constructed image that is outputted from the adder 220 and not positioned at a slice boundary, namely, to the vertical edges and horizontal edges shown in FIG. 1.

Thereby, if the filter code is 2, for each macroblock (re-constructed image), the coding, the decoding, and the de-blocking filtering are performed by the pipelining.

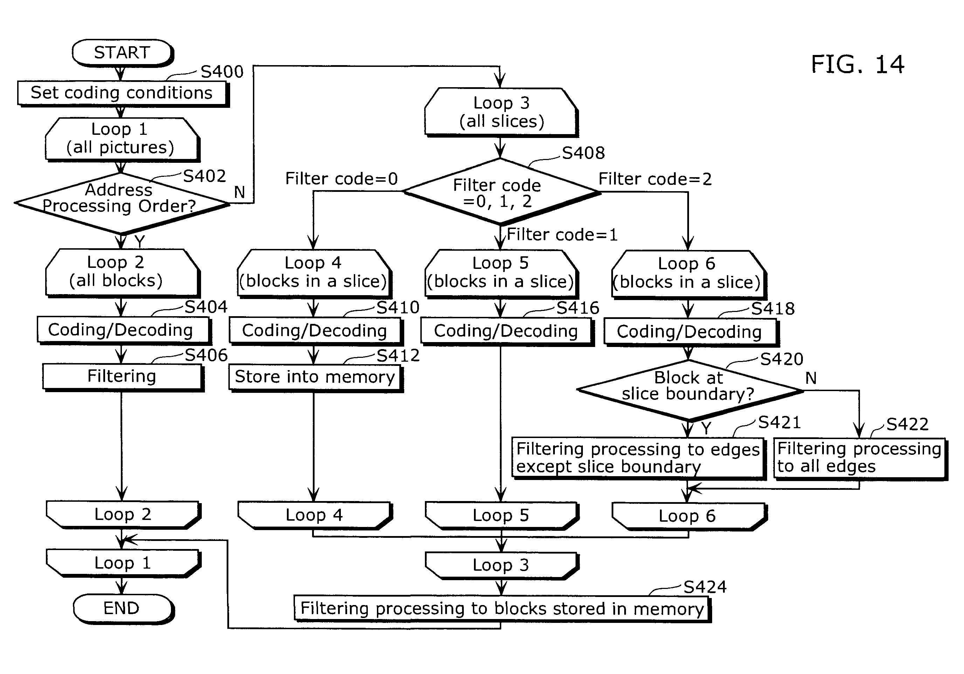

FIG. 14 is a flowchart showing a flow of processing performed by the image encoding device according to the first variation of the second embodiment.

The image encoding device according to the first variation of the second embodiment firstly sets coding conditions (Step S400). Then, the image encoding device determines, regarding a picture to be coded, whether or not the coding conditions indicate the address processing order (Step S402). If the determination is made that the address processing order is indicated (Y at Step S402), then the image encoding device applies coding and decoding to each macroblock to be coded in the address processing order (Step S404), and applies de-blocking filtering to the decoded macroblock (re-constructed image) (Step S406). In other words, the image encoding device performs the coding and decoding at the Step S404 and the de-blocking filtering at the Step S406 by pipelining, and repeats these processing for all macroblocks in the picture to be coded (Loop 2).

On the other hand, if the determination is made that the coding conditions do not indicate the address processing order, in other words, that the coding conditions indicate an indefinite order (N at Step S402), then the image encoding device further determines whether or not a value of a filter code of each slice is 0, 1, or 2 (Step S408). Here, if the determination is made that the value of the filter code is 0, then the image encoding device codes and decodes each macroblock to be coded in the predetermined order (Step S410), and sequentially stores the decoded macroblocks (re-constructed images) into the frame memory 202 (Step S412). In this manner, the image encoding device repeats the coding and decoding at the Step S410 and the storing at the Step S412 for all macroblocks in the slice (Loop 4).

On the other hand, if the determination is made at the Step S408 that the value of the filter code is 1, then the image encoding device codes and decodes each macroblock to be coded in the predetermined order (Step S416). In this manner, the image encoding device repeats the coding and decoding at the Step S416 for all macroblocks in the slice (Loop 5).

Moreover, if the determination is made at the Step S408 that the value of the filter code is 2, then the image encoding device codes and decodes each macroblock to be coded (Step S418), and determines whether or not the macroblock is positioned at a slice boundary (Step S420). Then, if the determination is made that the macroblock is positioned at a slice boundary (Y at Step S420), then the image encoding device applies de-blocking filtering to edges except the slice boundary in the decoded macroblock (re-constructed image) (Step S421), and on the other hand if the determination is made that the macroblock is not positioned at a slice boundary (N at Step S420), then the image decoding device applies de-blocking filtering to all edges in the decoded macroblock (re-constructed image) (Step S422). In other words, the image encoding device performs the coding and decoding at the Step S418 and the de-blocking filtering at the Steps S421 and S422 by pipelining. In this manner, the image encoding device repeats the processing from the Step S418 to the Step S422 for all macroblocks in the slice (Loop 6).

The image encoding device performs the above processing from the Step S408 to the Step S422 for all slices included in the picture to be coded (Loop 3), and applies de-blocking filtering to each re-constructed image that is stored into the frame memory 202 at the Step S412, in a order of smaller address as priority (Step S424). Then, the image encoding device performs the above processing from the Step S400 to the Step S424 for all pictures indicated by the input picture signal (Loop 1).

Note that the above has described that the image decoding device determines the value of the filter code for each slice, but the determination can be made for each picture.

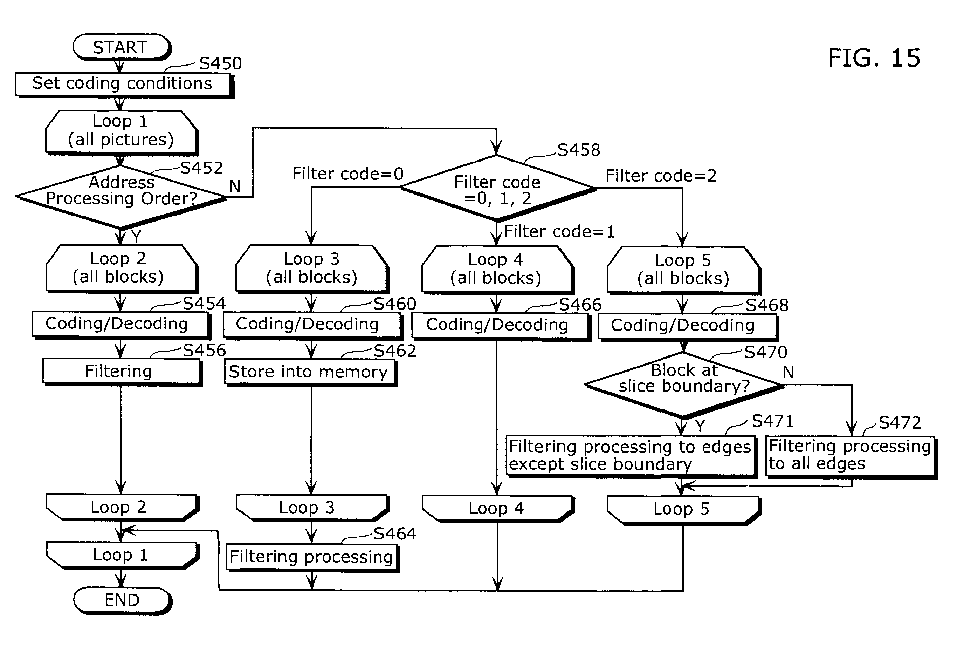

FIG. 15 is a flowchart showing a flow of processing performed by an image encoding device which determines the value of the filter code for each picture.

The image encoding device firstly sets coding conditions (Step S450). Then, the image encoding device firstly determines, regarding a picture to be coded, whether or not the coding conditions indicate the address processing order (Step S452). If the determination is made that the address processing order is indicated (Y at Step S452), then the image encoding device applies coding and decoding to each macroblock to be coded in the address processing order (Step S454), and applies de-blocking filtering to the decoded macroblock (re-constructed image) (Step S456). In other words, the image encoding device performs the coding and decoding at the Step S454 and the de-blocking filtering at the Step S456 by pipelining, and repeats these processing for all macroblocks in the picture to be coded (Loop 2).

On the other hand, if the determination is made that the coding conditions do not indicate the address processing order, in other words, that the coding conditions indicate an indefinite order (N at Step S452), then the image encoding device further determines whether or not a value of a filter code is 0, 1, or 2 (Step S458). Here, if the value of the filter code is 0, then the image encoding device codes and decodes each macroblock to be coded in the predetermined order (Step S460), and sequentially stores the decoded macroblocks (re-constructed images) into the frame memory 202 (Step S462). In this manner, the image encoding device repeats the coding and decoding at the Step S460 and the storing at the Step S462 for all macroblocks in the picture to be coded (Loop 3). Then, the image encoding device applies de-blocking filtering to re-constructed images of one picture which are accumulated in the frame memory 202, in an order from a re-constructed image positioned at a top-left corner in the picture and then sequentially from a re-constructed picture whose address is smaller compared to other re-constructed images (Step S464).

On the other hand, if the determination is made at the Step S458 that the value of the filter code is 1, then the image encoding device codes and decodes each macroblock to be coded in the predetermined order (Step S466). In this manner, the image encoding device repeats the coding and decoding at the Step S466 for all macroblocks in the picture to be coded (Loop 4).

Moreover, if the determination is made at the Step S458 that the value of the filter code is 2, then the image encoding device codes and decodes each macroblock to be coded (Step S418), and determines whether or not the macroblock is positioned at a slice boundary (Step S470). Then, if the determination is made that the macroblock is positioned at a slice boundary (Y at Step S470), then the imag encoding device applies de-blocking filtering to edges except the slice boundary in the decoded macroblock (re-constructed image) (Step S471), and on the other hand if the determination is made that the macroblock is not positioned at a slice boundary (N at Step S470), then the image encoding device applies de-blocking filtering to all edges in the decoded macroblock (re-constructed image) (Step S472). In other words, the image encoding device performs the coding and decoding at the Step S468 and the de-blocking filtering at the Steps S471 and S472 by pipelining. In this manner, the image encoding device repeats the processing from the Step S468 to the Step S472 for all macroblocks in the picture to be coded (Loop 5).

The image encoding device performs the above processing from the Step S450 to the Step S472 for all pictures indicated by the input picture signal (Loop 1).

As described above, if it is obvious that the filter code is fixed for each picture and does not vary depending on each slice, the image encoding device performs processing without the determination of the value of the filter code of each slice.

### (Second Variation)

Here, the second variation of the second embodiment is described.

The image encoding device 200 of the second embodiment determines, as shown at the Step S302 of FIG. 12, whether or not the order is the address processing order, for each picture to be coded, but an image encoding device of the second variation of the second embodiment determines only once whether or not the order is the address processing order, not for each picture to be coded, but for all pictures to be coded at the same time.

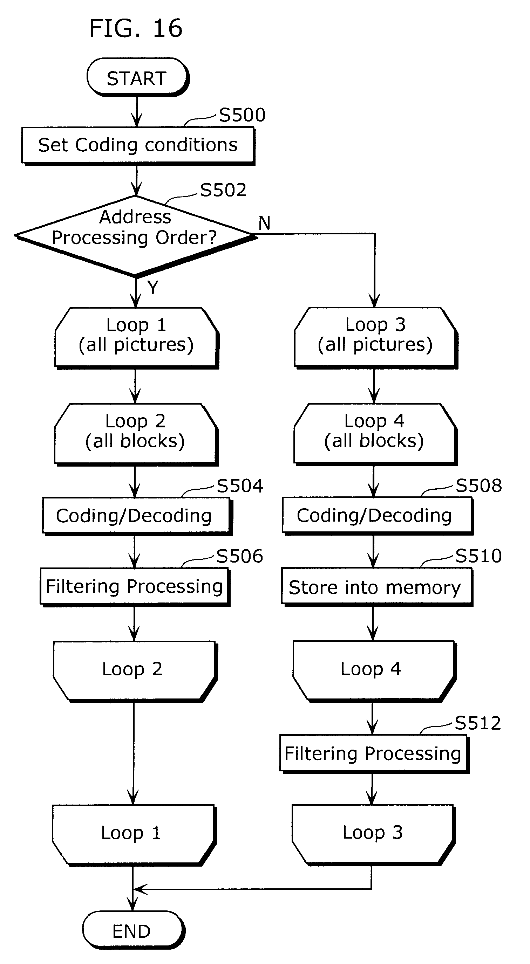

FIG. 16 is a flowchart showing a flow of processing performed by the image encoding device according to the second variation of the second embodiment.

The image encoding device firstly sets coding conditions (Step S500). Then, the image encoding device determines whether or not the coding conditions indicate the address processing order (Step S502). If the determination is made that the address processing order is indicated (Y at Step S502), then the image encoding device applies coding and decoding to each macroblock included in a picture to be coded in the address processing order (Step S504), and applies de-blocking filtering to the decoded macroblock (re-constructed image) (Step S506). The image encoding device repeats the processing at the Step S504 and the processing at the Step S506 for all macroblocks in the picture to be coded (Loop 2). Further, the image encoding device repeats these processing for all pictures indicated by the input picture signal (Loop 1).

On the other hand, if the determination is made that the coding conditions do not indicate the address processing order, in other words, that the coding conditions indicate an indefinite order (N at Step S502), then the image encoding device codes and decodes each macroblock to be coded in the predetermined order (Step S508), and sequentially stores the decoded macroblock (re-constructed image) into the frame memory 202 (Step S510). In this manner, the image encoding device repeats the processing at the Step S508 and the processing at the Step S510 for all macroblocks in the picture to be coded (Loop 4). Then, the image encoding device applies de-blocking filtering to re-constructed images of one picture which are accumulated in the frame memory 202, in an order from a re-constructed image positioned at a top-left corner in the picture and then sequentially from a re-constructed picture whose address is smaller compared to other re-constructed images (Step S512). The image encoding device repeats the above processing from the Step S508 to the Step S512 for all pictures indicated by the input picture signal (Loop 3).

Note that each of the image encoding devices of the second embodiment and the variations thereof include functions of each of the image decoding devices of the first embodiment and the variation thereof, so that all details described in the first embodiment and the variation thereof are applied to the second embodiment and the variations thereof.

For example, each of the second embodiment and the variations thereof includes the frame memory 202 which stores re-constructed images prior to the de-blocking filtering, and the frame memory 223 which stores re-constructed images after the de-blocking filtering, but the two memories may be structured as one frame memory.

### (Third Embodiment)

In addition, by recording a program, which realizes the image decoding device or the image encoding device described in the above first embodiment and the second embodiment, onto a recording medium such as a flexible disk, it is possible to easily perform the processing described in the first embodiment and the second embodiment in an independent computer system.

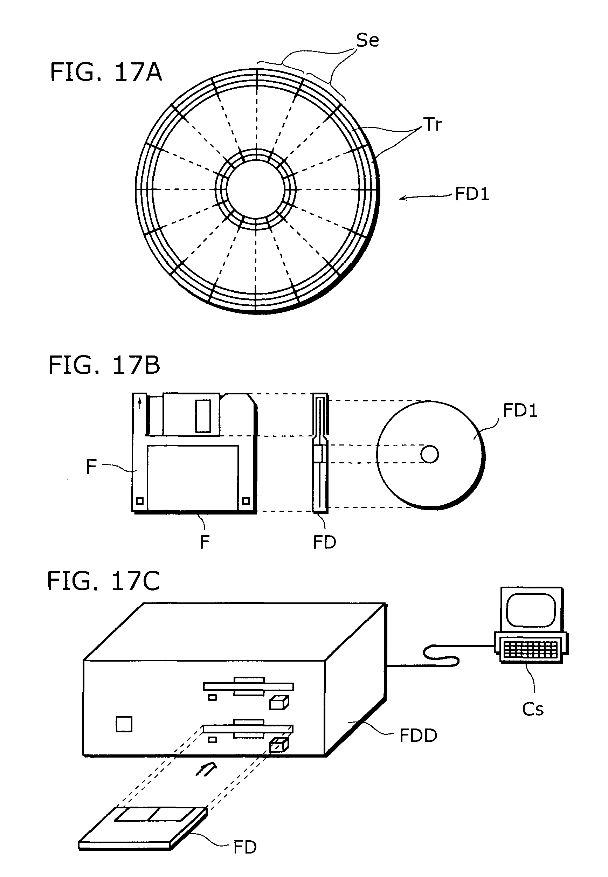

FIGS. 17A to 17C are explanatory diagrams of a case where the processing is performed by the computer system, using a flexible disk which stores a program for realizing the image decoding device and the image encoding device described in the first embodiment and the second embodiment.

FIG. 17B shows a front view and a cross-sectional view of a case of the flexible disk, and a view of the flexible disk itself, and FIG. 17A shows an example of a physical format of the flexible disk, as a recording medium body. The flexible disk FD is contained in the case F, and on a surface of the disk, a plurality of tracks Tr are formed concentrically from the outer periphery to the inner periphery, and each track is segmented into sixteen sectors Se in an angular direction. Therefore, in the flexible disk storing the above program, the image decoding method or the image coding metohd, as the program, is recorded in an area allocated on the above flexible disk FD.

Moreover, FIG. 17C shows a structure for recording and reproducing the above program on the flexible disk FD. When the program is recorded onto the flexible disk FD, the image decoding method or the image coding method, as the program, is written from a computer system Cs via a flexible disk drive. Further, when the above image decoding method is constructed in the computer system using the program in the flexible disk, the program is read out from the flexible disk via the flexible disk drive and transferred to the computer system.

Note that the above has described that the recording medium is assumed to be the flexible disk, but the above can also be performed using an optical disk. Note also that , the recording medium is not limited to the above mediums, but any other mediums, such as an IC card and a ROM cassette, can be also used, as far as the mediums can record the program.

### (Fourth Embodiment)

Furthermore, the applications of the image encoding device and the image decoding device described in the above embodiments, and a system using such applications are described here.

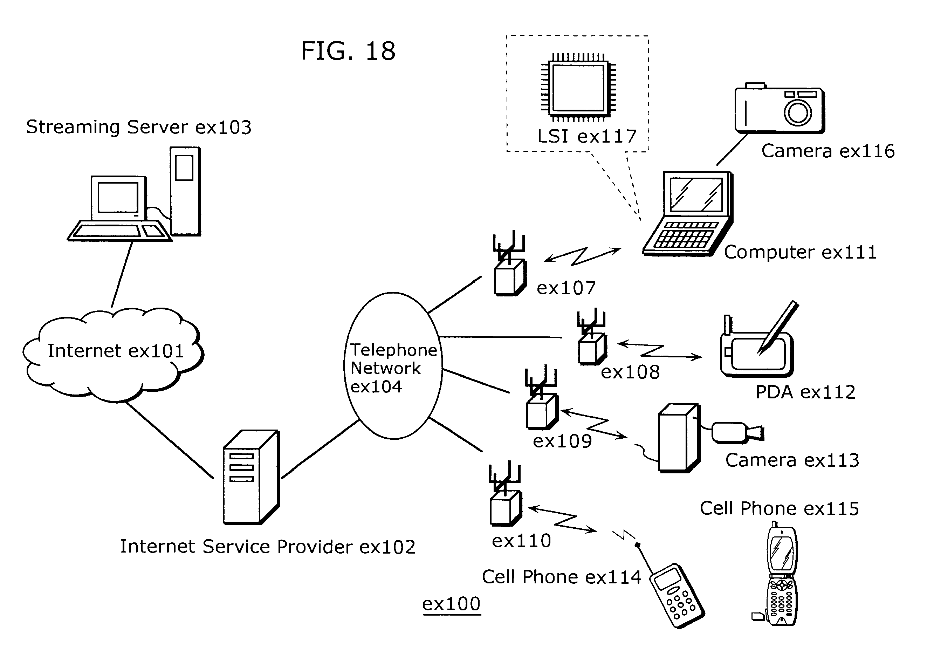

FIG. 18 is a block diagram showing the overall configuration of a content supply system ex100 for realizing content distribution service. The area for providing communication service is divided into cells of desired size, and base stations ex107 to ex110 which are fixed wireless stations are placed in respective cells.

In this content supply system ex100, various devices such as a computer ex111, a personal digital assistant (PDA) ex112, a camera ex113, a cell phone ex114 and a camera-equipped cell phone ex115 are connected to the Internet ex101, via an Internet service provider ex102, a telephone network ex104 and base stations ex107 to ex110, for example.

However, the content supply system ex100 is not limited to the combination as shown in FIG. 18, and may include a combination of any of these devices which are connected to each other. Also, each device may be connected directly to the telephone network ex104, not through the base stations ex107 to ex110 which are the fixed wireless stations.

The camera ex113 is a device such as a digital video camera capable of shooting moving images. The cell phone may be any of a cell phone of a Personal Digital Communications (PDC) system, a Code Division Multiple Access (CDMA) system, a Wideband-Code Division Multiple Access (W-CDMA) system and a Global System for Mobile Communications (GSM) system, a Personal Handy-phone System (PHS), and the like.

Also, a streaming server ex103 is connected to the camera ex113 via the base station ex109 and the telephone network ex104, which realizes live distribution or the like using the camera ex113 based on the coded data transmitted from the user. The coding of the data shot by the camera may be performed by the camera ex113, the server for transmitting the data, or the like. Also, the moving image data shot by a camera ex116 may be transmitted to the streaming server ex103 via the computer ex111. The camera ex116 is a device such as a digital camera capable of shooting still and moving images. In this case, either the computer ex111 or the camera ex116 may code the moving image data. An LSI ex117 included in the computer ex111 or the camera ex116 performs the coding processing. Note that software for coding and decoding images may be integrated into any type of a recording medium (such as a CD-ROM, a flexible disk and a hard disk) that is readable by the computer ex111 or the like. Furthermore, the camera-equipped cell phone ex115 may transmit the moving image data. This moving image data is the data coded by the LSI included in the cell phone ex115.

In this content supply system ex100, contents (such as a video of a live music performance) shot by users using the camera ex113, the camera ex116 or the like are coded in the same manner as in the above embodiments and transmitted to the streaming server ex103, while the streaming server ex103 makes stream distribution of the above content data to the clients at their requests. The clients include the computer ex111, the PDA ex112, the camera ex113, the cell phone ex114, and the like, capable of decoding the above-mentioned coded data. The content supply system ex100 is a system in which the clients can thus receive and reproduce the coded data, and further can receive, decode and reproduce the data in real time so as to realize personal broadcasting.

When each device included in this system performs coding or decoding, the image encoding device or the image decoding device described in the above embodiments may be used.

A cell phone is now described as an example thereof.

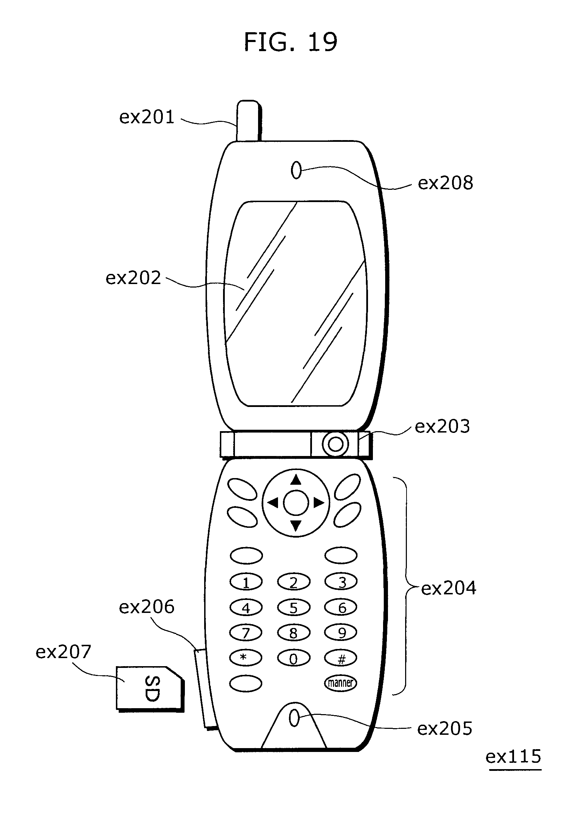

FIG. 19 is a diagram showing a cell phone ex115 which uses the image encoding device and the image decoding device as described in the above embodiments. The cell phone ex115 has: an antenna ex201 for communicating radio waves with the base station ex110; a camera unit ex203 such as a CCD camera capable of shooting moving and still images; a display unit ex202 such as a liquid crystal display for displaying the data obtained by decoding video shot by the camera unit ex203, video received by the antenna ex201, or the like; a main body including a set of operation keys ex204; a voice output unit ex208 such as a speaker for outputting voices; a voice input unit ex205 such as a microphone for inputting voices; a recording medium ex207 for storing coded or decoded data, such as data of moving or still images shot by the camera, and data of text, moving images or still images of received e-mails; and a slot unit ex206 for attaching the recording medium ex207 into the cell phone ex115. The recording medium ex207 includes a flash memory element, a kind of Electrically Erasable and Programmable Read Only Memory (EEPROM) that is an electrically rewritable and erasable nonvolatile memory, in a plastic case such as an SD card.

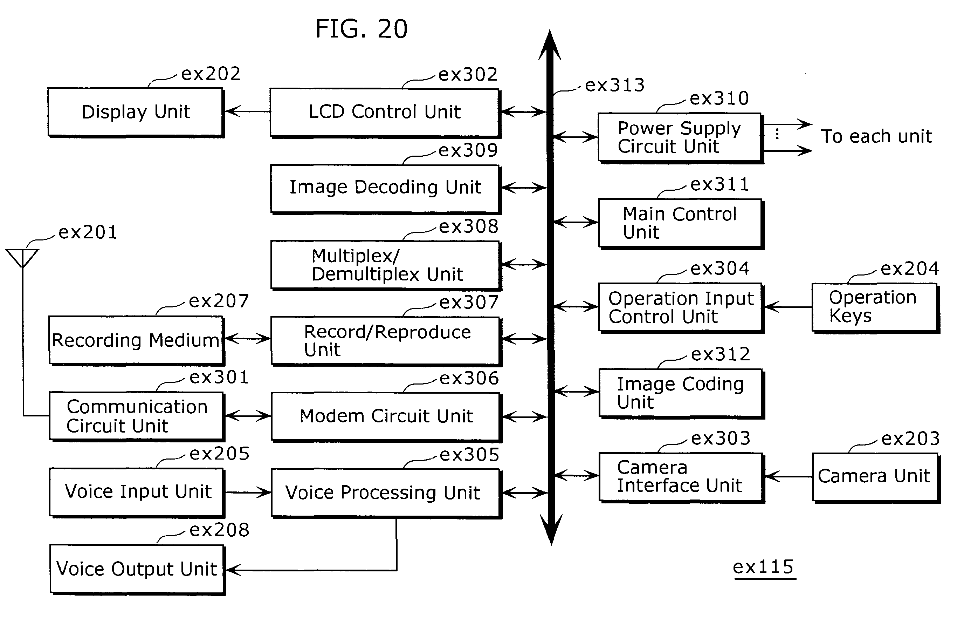

Furthermore, the cell phone ex115 is described with reference to FIG. 20. In the cell phone ex115, a power supply circuit unit ex310, an operation input control unit ex304, an image coding unit ex312, a camera interface unit ex303, an Liquid Crystal Display (LCD) control unit ex302, an image decoding unit ex309, a multiplex/demultiplex unit ex308, a record/reproduce unit ex307, a modem circuit unit ex306 and a voice processing unit ex305, are connected to a main control unit ex311, and to each other, via a synchronous bus ex313. The main control unit ex311 is for the overall controlling of each unit of the main body including the display unit ex202 and the operation keys ex204.

When a call-end key or a power key is turned ON by a user's operation, the power supply circuit unit ex310 supplies the respective units with power from a battery pack so as to activate the camera-equipped digital cell phone ex115 to a ready state.

In the cell phone ex115, under the control of the main control unit ex311 including a CPU, ROM, RAM and the like, the voice processing unit ex305 converts the voice signals received by the voice input unit ex205 in voice conversation mode into digital voice data, the modem circuit unit ex306 performs spread spectrum processing of the digital voice data, and the communication circuit unit ex301 performs digital-to-analog conversion and frequency transformation of the data, so as to transmit the resulting data via the antenna ex201. Also, in the cell phone ex115, the data received by the antenna ex201 in voice conversation mode is amplified and subjected to the frequency transformation and analog-to-digital conversion, the modem circuit unit ex306 performs inverse spread spectrum processing of the data, and the voice processing unit ex305 converts it into analog voice data, so as to output the resulting data via the voice output unit ex208.

Furthermore, when transmitting an e-mail in data communication mode, the text data of the e-mail inputted by operating the operation keys ex204 of the main body is sent out to the main control unit ex311 via the operation input control unit ex304. After the modem circuit unit ex306 performs spread spectrum processing of the text data and the communication circuit unit ex301 performs a digital-to-analog conversion and frequency transformation on the text data, the main control unit ex311 transmits the data to the base station ex110 via the antenna ex201.

When transmitting image data in data communication mode, the image data shot by the camera unit ex203 is provided to the image coding unit ex312 via the camera interface unit ex303. When the image data is not transmitted, the image data shot by the camera unit ex203 can also be displayed directly on the display unit 202 via the camera interface unit ex303 and the LCD control unit ex302.

The image coding unit ex312, including the image encoding device described in the present invention, compresses and codes the image data provided from the camera unit ex203 by the image coding method used for the image encoding device as described in the above embodiments so as to convert it into coded image data, and sends it out to the multiplex/demultiplex unit ex308. At this time, the cell phone ex115 sends out the voices received by the voice input unit ex205 during the shooting by the camera unit ex203, as digital voice data, to the multiplex/demultiplex unit ex308 via the voice processing unit ex305.

The multiplex/demultiplex unit ex308 multiplexes the coded image data provided from the image coding unit ex312 and the voice data provided from the voice processing unit ex305, and the modem circuit unit ex306 then performs spread spectrum processing of the multiplexed data obtained as the result of the processing, and the communication circuit unit ex301 performs digital-to-analog conversion and frequency transformation on the resulting data and transmits it via the antenna ex201.

As for receiving data of a moving image file which is linked to a website or the like in data communication mode, the modem circuit unit ex306 performs inverse spread spectrum processing of the data received from the base station ex110 via the antenna ex201, and sends out the multiplexed data obtained as the result of the processing to the multiplex/demultiplex unit ex308.

In order to decode the multiplexed data received via the antenna ex201, the multiplex/demultiplex unit ex308 demultiplexes the multiplexed data into a coded bit stream of image data and a coded bit stream of voice data, and provides the coded image data to the image decoding unit ex309 and the voice data to the voice processing unit ex305, respectively, via the synchronous bus ex313.

Next, the image decoding unit ex309, including the image decoding device described in the present invention, decodes the coded bit stream of the image data using the decoding method corresponding to the coding method as described in the above embodiments, so as to generate reproduced moving image data, and provides this data to the display unit ex202 via the LCD control unit ex302, and thus moving image data included in a moving image file linked to a website, for instance, is displayed. At the same time, the voice processing unit ex305 converts the voice data into analog voice data, and provides this data to the voice output unit ex208, and thus voice data included in a moving image file linked to a website, for instance, is reproduced.

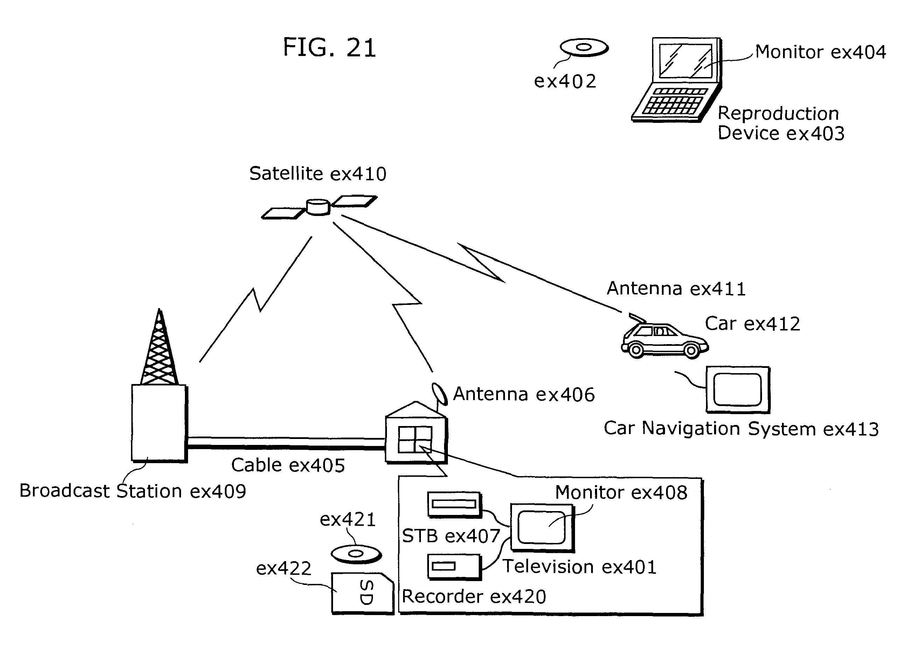

The present invention is not limited to the above-mentioned system since satellite or terrestrial digital broadcasting has been in the news lately, and at least either the image encoding device or the image decoding device described in the above embodiments can be incorporated into the digital broadcasting system as shown in FIG. 21. More specifically, a coded bit stream of video information is transmitted from a broadcast station ex409 to a communication or broadcast satellite ex410 via radio waves. Upon receipt of it, the broadcast satellite ex410 transmits radio waves for broadcasting, a home antenna ex406 with a satellite broadcast reception function receives the radio waves, and a device such as a television (receiver) ex401 or a Set Top Box (STB) ex407 decodes the coded bit stream for reproduction. The image decoding device described in the above embodiments can be implemented in a reproduction device ex403 for reading and decoding a coded bit stream recorded on a storage medium ex402 such as a CD and DVD that is a recording medium. In this case, the reproduced video signals are displayed on a monitor ex404. It is also conceived to implement the image decoding device in the set top box ex407 connected to a cable ex405 for cable television or the antenna ex406 for satellite and/or terrestrial broadcasting so as to reproduce them on a monitor ex408 of the television. The image decoding device may be incorporated into the television, not in the set top box. Also, a car ex412 having an antenna ex411 can receive signals from the satellite ex410, the base station ex107 or the like, and reproduce moving images on a display device such as a car navigation system ex413 or the like in the car ex412.

Furthermore, the image encoding device as described in the above embodiments can code image signals and record them on a recording medium. As a concrete example, there is a recorder ex420 such as a DVD recorder for recording image signals on a DVD disk ex421 and a disk recorder for recording them on a hard disk. They can also be recorded on an SD card ex422. If the recorder ex420 includes the image decoding device as described in the above embodiments, the image signals recorded on the DVD disk ex421 or the SD card ex422 can be reproduced for display on the monitor ex408.

As for the configuration of the car navigation system ex413, a configuration without the camera unit ex203, the camera interface unit ex303 and the image coding unit ex312, out of the units as shown in FIG. 20, is conceivable. The same applies to the computer ex111, the television (receiver) ex401 and others.

Moreover, three types of implementations can be conceived for a terminal such as the above-mentioned cell phone ex114: a communication terminal equipped with both an encoder and a decoder; a sending terminal equipped with an encoder only; and a receiving terminal equipped with a decoder only.

Thus, the image encoding device and the image decoding device described in the above embodiments can be used in any of the above-described apparatuses and systems, and thereby the effects described in the above embodiments can be obtained.

Note that the present invention is not limited to the above embodiments but various variations and modifications are possible in the embodiments without departing from the scope of the present invention.

Note also that functional blocks in the block diagrams (FIG. 8 and FIG. 12) are implemented into a LSI which is an integrated circuit. These may be integrated separately, or a part or all of them may be integrated into a single chip. (For example, functional blocks except a memory may be integrated into a single chip.)

Here, the integrated circuit is referred to as a LSI, but the integrated circuit can be called an IC, a system LSI, a super LSI or an ultra LSI depending on their degrees of integration.

Note also that the technique of integrated circuit is not limited to the LSI, and it may be implemented as a dedicated circuit or a general-purpose processor. It is also possible to use a Field Programmable Gate Array (FPGA) that can be programmed after manufacturing the LSI, or a reconfigurable processor in which connection and setting of circuit cells inside the LSI can be reconfigured.

Furthermore, if due to the progress of semiconductor technologies or their derivations, new technologies for integrated circuits appear to be replaced with the LSIs, it is, of course, possible to use such technologies to implement the functional blocks as an integrated circuit. For example, biotechnology and the like can be applied to the above implementation.

Note also that only a means for storing data to be coded or decoded, among these functional blocks, may be realized as another structure, without being integrated into the single chip.

### Industrial Applicability

The image decoding device and the image encoding device according to the present invention have effects of eliminating block distortion and also restraining decrease of a processing speed, even if an order of decoding blocks is changed, and can be applied to, for example, a portable telephone, a digital versatile disk (DVD) device, a personal computer, and the like.

## Claims

1. An image decoding device which decodes a coded picture on a block-by-block basis, said image decoding device comprising:
a decoding unit operable to sequentially decode each block included in the coded picture;
a storage unit in which each block decoded by said decoding unit is stored;
a filter unit operable to apply filtering processing to each block decoded by said decoding unit;
a first executing unit operable to store the decoded block into said storage unit every time the block is decoded by said decoding unit, and to apply the filter processing to the block stored in said storage unit by said filter unit;
a second executing unit operable to apply the filtering processing to the decoded block by said filter unit, every time the block is decoded by said decoding unit; and
a switch control unit operable to switch between an operation performed by said first executing unit and an operation performed by said second executing unit.

2. The image decoding device according to Claim 1,
wherein said switch control unit is operable to
switch between the operation performed by said first executing unit and the operation performed by said second executing unit, depending on an order of the blocks to be sequentially decoded by said decoding unit.

3. The image decoding device according to Claim 2,
wherein said switch control unit is operable to:
prohibit the operation performed by said first executing unit and permit the operation performed by said second executing unit, when the order of the blocks to be sequentially decoded by said decoding unit is a regular order of decoding the blocks continuously from a block positioned at an edge of the picture; and
prohibit the operation performed by said second executing unit and permit the operation performed by said first executing unit, when the order of the blocks to be sequentially decoded by said decoding unit is not the regular order.

4. The image decoding device according to Claim 1,
wherein said switch control unit is operable to
switch between the operation performed by said first executing unit and the operation performed by said second executing unit, depending on the number of the blocks to be decoded by said decoding unit within a predetermined time period.

5. The image decoding device according to Claim 4,
wherein said switch control unit is operable to:
prohibit the operation performed by said first executing unit and permit the operation performed by said second executing unit, when the number of the blocks to be decoded by said decoding unit within the predetermined time period is larger than a predetermined value; and
prohibit the operation performed by said second executing unit and permit the operation performed by said first executing unit, when the number of the blocks is equal to or smaller than the predetermined value.

6. The image decoding device according to Claim 2,
wherein said switch control unit is operable to
switch between the operation performed by said first executing unit and the operation performed by said second executing unit, based on filter information which indicates a portion that is in the block and is to be applied with the filtering processing, when the order of the blocks to be sequentially decoded by said decoding unit is not a regular order of decoding the blocks continuously from a block positioned at an edge of the picture.

7. The image decoding device according to Claim 1,
wherein said switch control unit is operable to
switch between the operation performed by said first executing unit and the operation performed by said second executing unit, depending on a type of a coded signal including the coded pictures.

8. The image decoding device according to Claim 7,
wherein said switch control unit is operable to:
prohibit the operation performed by said first executing unit and permit the operation performed by said second executing unit, when a determination is made, based on the type of the coded signal, that the blocks need to be decoded continuously from a block positioned at an edge of the picture; and
prohibit the operation performed by said second executing unit and permit the operation performed by said first executing unit, when the determination is not able to be performed.

9. The image decoding device according to Claim 1,
wherein said switch control unit is operable to:
obtain an external signal which indicates whether or not the blocks need to be decoded continuously from a block positioned at an edge of the picture;
prohibit the operation performed by said first executing unit and permit the operation performed by said second executing unit, when the external signal indicates that the blocks need to be decoded continuously; and
prohibit the operation performed by said second executing unit and permit the operation performed by said first executing unit, when the external signal indicates that the blocks should not be decoded continuously.

10. An image encoding device which codes a picture on a block-by-block basis, said image encoding device comprising:
a coding unit operable to sequentially code each block included in the picture;
a decoding unit operable to sequentially decode the coded block, every time the block is coded by said coding unit; a storage unit in which each block decoded by said decoding unit is stored;
a filter unit operable to apply filtering processing to each block decoded by said decoding unit;
a first executing unit operable to store the decoded block into said storage unit every time the block is decoded by said decoding unit, and to apply the filtering processing to the block stored in said storage unit, by said filter unit;
a second executing unit operable to apply the filtering processing to the decoded block by said filter unit, every time the block is decoded by said decoding unit; and
a switch control unit operable to switch between an operation performed by said first executing unit and an operation performed by said second executing unit.

11. The image encoding device according to Claim 10,
wherein said switch control unit is operable to
switch between the operation performed by said first executing unit and the operation performed by said second executing unit, depending on an order of the blocks to be sequentially decoded by said decoding unit.

12. The image encoding device according to Claim 11,
wherein said switch control unit is operable to:
prohibit the operation performed by said first executing unit and permit the operation performed by said second executing unit, when the order of the blocks to be sequentially decoded by said decoding unit is a regular order of decoding the blocks continuously from a block positioned at an edge of the picture; and
prohibit the operation performed by said second executing unit and permit the operation performed by said first executing unit, when the order of the blocks to be sequentially decoded by said decoding unit is not the regular order.

13. The image encoding device according to Claim 10,
wherein said switch control unit is operable to
switch between the operation performed by said first executing unit and the operation performed by said second executing unit, depending on the number of the blocks to be coded and decoded by said coding unit and said decoding unit within a predetermined time period.

14. The image encoding device according to Claim 11,
wherein said switch control unit is operable to
switch between the operation performed by said first executing unit and the operation performed by said second executing unit, based on filter information which indicates a portion that is in the block and is to be applied with the filtering processing, when the order of the blocks to be sequentially decoded by said decoding unit is not a regular order of decoding the blocks continuously from a block positioned at an edge of the picture.

15. The image encoding device according to Claim 10,
wherein said switch control unit is operable to
switch between the operation performed by said first executing unit and the operation performed by said second executing unit, depending on a method of coding performed by said coding unit.

16. The image encoding device according to Claim 15,
wherein said switch control unit is operable to:
prohibit the operation performed by said first executing unit and permit the operation performed by said second executing unit, when a determination is made, depending on the method of coding, that the blocks need to be continuously decoded from a block positioned at an edge of the picture; and
prohibit the operation performed by said second executing unit and permit the operation performed by said first executing unit, when the determination is not able to be performed.

17. An image decoding method of decoding a coded picture on a block-by-block basis, said image decoding method comprising:
a decoding step of sequentially decoding each block included in the coded picture;
a first executing step of storing the decoded block into a storage medium, every time the block is decoded in said decoding step, and of applying filtering processing to the block stored in the storage medium;
a second executing step of applying the filtering processing to the decoded block, every time the block is decoded in said decoding step; and
a switch controlling step of switching between an operation performed in said first executing step and an operation performed in said second executing step.

18. An image coding method of coding a picture on a block-by-block basis, said image coding method comprising:
a coding step of sequentially coding each block included in the picture;
a decoding step of sequentially decoding the coded block, every time the block is coded in said coding step;
a first executing step of storing the decoded block into a storage medium every time the block is decoded in said decoding step, and of applying filtering processing to the block stored in the storage medium; and
a second executing step of applying the filtering processing to the decoded block, every time the block is decoded in said decoding step; and
a switch controlling step of switching between an operation performed in said first executing step and an operation performed in said second executing step.

19. An integrated circuit which decodes a coded picture on a block-by-block basis, said integrated circuit comprising:
a decoding unit operable to sequentially decode each block included in the coded picture;
a storage unit in which each block decoded by said decoding unit is stored;
a filter unit operable to apply filtering processing to each block decoded by said decoding unit;
a first executing unit operable to store the decoded block into said storage unit every time the block is decoded by said decoding unit, and to apply the filtering processing to the block stored in said storage unit, by said filter unit;
a second executing unit operable to apply the filtering processing to the decoded block by said filter unit, every time the block is decoded by said decoding unit; and
a switch control unit operable to switch between an operation performed by said first executing unit and an operation performed by said second executing unit.

20. An integrated circuit which codes a picture on a block-by-block basis, said integrated circuit comprising:
a coding unit operable to sequentially code each block included in the picture;
a decoding unit operable to sequentially decode the coded block, every time the block is coded by said coding unit;
a storage unit operable in which each block decoded by said decoding unit is stored;
a filter unit operable to apply filtering processing to each block decoded by said decoding unit;
a first executing unit operable to store the decoded block into said storage unit, every time the block is decoded by said decoding unit, and to applying the filitering processing to the block stored in said storage unit, by said filter unit;
a second executing unit operable to apply the filtering processing to the decoded block by said filter unit, every time the block is decoded by said decoding unit; and
a switch control unit operable to switch between an operation performed by said first executing unit and an operation performed by said second executing unit.
